# EUROPEAN PATENT SPECIFICATION

(11) **EP 4 178 032 B1**
(45) Date of publication and mention of the grant of the patent: **02.09.2026**
(21) Application number: 21852193.8
(22) Date of filing: 27.07.2021
(51) Int. Cl.: H01Q 1/24, H01Q 21/08, G01S 5/02, H01Q 9/16, H01Q 21/28

(54) **ANTENNA AND ELECTRONIC DEVICE COMPRISING SAME**
ANTENNE UND ELEKTRONISCHE VORRICHTUNG DAMIT
ANTENNE ET DISPOSITIF ÉLECTRONIQUE COMPRENANT CETTE DERNIÈRE

(30) Priority: 06.08.2020 KR 20200098801
(43) Date of publication of application: 10.05.2023
(73) Proprietor: Samsung Electronics Co., Ltd., Suwon-si, Gyeonggi-do 16677 (KR)
(72) Inventor: SONG, Jaehoon, Suwon-si, Gyeonggi-do 16677 (KR); SEO, Seunghan, Suwon-si, Gyeonggi-do 16677 (KR); KANG, Youngjin, Suwon-si, Gyeonggi-do 16677 (KR); KIM, Seokwon, Suwon-si, Gyeonggi-do 16677 (KR); KIM, Dongyeon, Suwon-si, Gyeonggi-do 16677 (KR); SON, Dongil, Suwon-si, Gyeonggi-do 16677 (KR)
(74) Representative: Gulde & Partner
(86) International application number: PCT/KR2021/009708
(87) International publication number: WO 2022/030850

(56) References cited:
- WO-A1-2020/050591
- WO-A1-2020/116968
- KR-A- 20190 024 087
- KR-A- 20200 012 106
- KR-A- 20200 068 313
- KR-A- 20200 070 782
- US-A1- 2019 317 177
- US-A1- 2019 386 380
- US-A1- 2020 021 011
- US-A1- 2020 021 011
- US-A1- 2020 186 180

## Description

### [Technical Field]

Various embodiments of the disclosure relate to an electronic device including an antenna.

### [Background Art]

With the development of wireless communication technology, electronic devices (e.g., electronic devices for communication) are commonly used in daily life, and the use of contents is increasing exponentially. Due to the rapid increase in the use of contents, network capacity is gradually reaching its limit. Furthermore, in order to meet the increasing demand for wireless data traffic since the commercialization of a fourth-generation (4G) communication system, a communication system (e.g., a fifth-generation (5G) or pre-5G communication system, or new radio (NR)) that transmits and/or receives a signal by using a frequency of a high-frequency (e.g., mmWave) band (e.g., about 1.8 GHz, or about 3 GHz to about 300 GHz band) is being studied. US 2019/0317177 A1 discloses electronic devices with motion sensing and angle of arrival detection circuitry. US 2020/0021011 A1 discloses an electronic device having angle of arrival detection capabilities. WO 2020/050591 A1 discloses an electronic device including a 5G antenna module. US 2019/0386380 A1 discloses an antenna including conductive pattern and electronic device including the same. WO 2020/116968 A1 discloses an antenna module including a signal line exposed to the outside through a face of a PCB. US 2020/0186180 A1 discloses an electronic device comprising an antenna for wireless communication.

### [Disclosure of Invention]

### [Technical Problem]

Next-generation wireless communication technology may transmit and/or receive signals by using substantially high-frequency (e.g., mmWave) bands (e.g., about 1.8 GHz, or about 3 GHz to about 300 GHz bands), and may thus require an efficient arrangement structure for overcoming high free space loss due to frequency characteristics and increasing antenna gain, and a new antenna module structure corresponding thereto.

An electronic device may estimate the distance to an external device or the position of the external device by using ultra-wideband (UWB) technology. For example, the electronic device may calculate a first angle (e.g., a two-dimensional position) of the external device by using a phase difference between signals received by two UWB antennas disposed on a first axis. The electronic device may calculate a second angle (e.g., a two-dimensional position) of the external device by using a phase difference between signals received by two UWB antennas disposed on a second axis different from the first axis. The electronic device may estimate the three-dimensional position of the external device based on the first angle of the external device estimated by the UWB antennas disposed on the first axis and the second angle of the external device estimated by the UWB antennas disposed on the second axis. For example, the electronic device may require multiple UWB antennas disposed on two different axes in order to estimate a three-dimensional position of an external device.

When the electronic device supports UWB technology and wireless communication (e.g., cellular communication) using a frequency of a high-frequency (e.g., mmWave) band, the electronic device may require multiple UWB antennas for the UWB technology in addition to multiple antenna modules for the wireless communication. The electronic device may require a method for arranging multiple antenna modules and multiple UWB antennas in a limited inner space.

Various embodiments of the disclosure may provide an electronic device including multiple antenna modules for wireless communication using of a frequency of a high-frequency band and multiple UWB antennas for UWB technology

### [Solution to Problem]

According to an embodiment, an electronic device is provided as defined in the appended claims.

### [Advantageous Effects of Invention]

According to various embodiments of the disclosure, at least one antenna related to estimating the position of the external device may be disposed in a partial area of an antenna module including an array antenna for wireless communication using a frequency of a high-frequency band in the electronic device, thereby securing the degree of freedom of arrangement in the inner space of the electronic device.

### [Brief Description of Drawings]

FIG. 1 is a block diagram of an electronic device in a network environment according to various embodiments.
FIG. 2 is a block diagram of an electronic device for supporting legacy network communication and 5G network communication according to various embodiments of the disclosure.
FIG. 3A is a perspective view of an electronic device according to various embodiments of the disclosure.
FIG. 3B is a rear perspective view of an electronic device according to various embodiments of the disclosure.
FIG. 3C is an exploded perspective view of an electronic device according to various embodiments of the disclosure.
FIG. 4A illustrates an embodiment of the structure of a third antenna module described with reference to FIG. 2.
FIG. 4B illustrates a cross section taken along line Y-Y' of the third antenna module illustrated in FIG. 4A(a).
FIG. 5A is an example of a perspective view of an antenna module according to various embodiments of the disclosure.
FIG. 5B is an example of a perspective view of an antenna module according to various embodiments of the disclosure.
FIG. 5C is an example of a perspective view of an antenna module according to various embodiments of the disclosure.
FIG. 6 illustrates a configuration of an antenna module including multiple array antennas according to various embodiments of the disclosure.
FIG. 7A illustrates a state in which an antenna module according to various embodiments of the disclosure is disposed in an electronic device.
FIG. 7B illustrates a state in which an antenna module according to various embodiments of the disclosure is disposed in an electronic device.
FIG. 8 is a partial cross-sectional view of an electronic device, taken along line C-C' in FIG. 7A according to various embodiments of the disclosure.
FIG. 9A is a front perspective view of an electronic device illustrating an unfolded state (flat state or unfolding state) according to various embodiments of the disclosure.
FIG. 9B is a plan view illustrating the front surface of an electronic device in an unfolded state according to various embodiments of the disclosure.
FIG. 9C is a plan view illustrating the rear surface of an electronic device in an unfolded state according to various embodiments of the disclosure.
FIG 9D illustrate a perspective view of an electronic device in a folded state (folding state) according to various embodiments of the disclosure.
FIG. 10A illustrates a front perspective view of an electronic device in a closed state according to various embodiments of the disclosure.
FIG. 10B illustrates a front perspective view of an electronic device in an opened state according to various embodiments of the disclosure.
FIG. 10C illustrates a rear perspective view of an electronic device in a closed state according to various embodiments of the disclosure.
FIG. 10D illustrates a rear perspective view of an electronic device in an opened state according to various embodiments of the disclosure.
FIG. 11 is a block diagram of an electronic device for estimation of the position of an external device according to various embodiments of the disclosure.
FIG. 12 is a flowchart for estimating the position of an external device in an electronic device according to various embodiments of the disclosure.

### [Mode for the Invention]

Hereinafter, various embodiments will be described in detail with reference to the accompanying drawings.

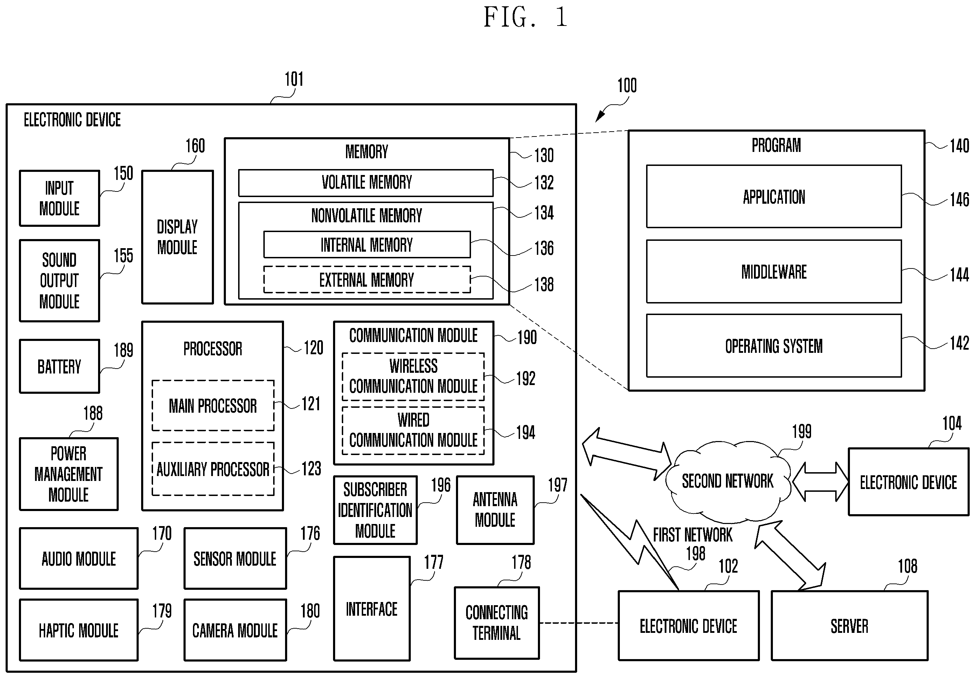

FIG. 1 is a block diagram illustrating an example electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external devices 102, 104, or 108. For example, if the electronic device 101 should perform a function or a service automatically, or in response to a request from a user or another device, the electronic device 101, instead of, or in addition to, executing the function or the service, may request the one or more external devices to perform at least part of the function or the service. The one or more external devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external device 104 may include an internet-of-things (IoT) device. The server 108 may be an intelligent server using machine learning and/or a neural network. According to an embodiment, the external device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

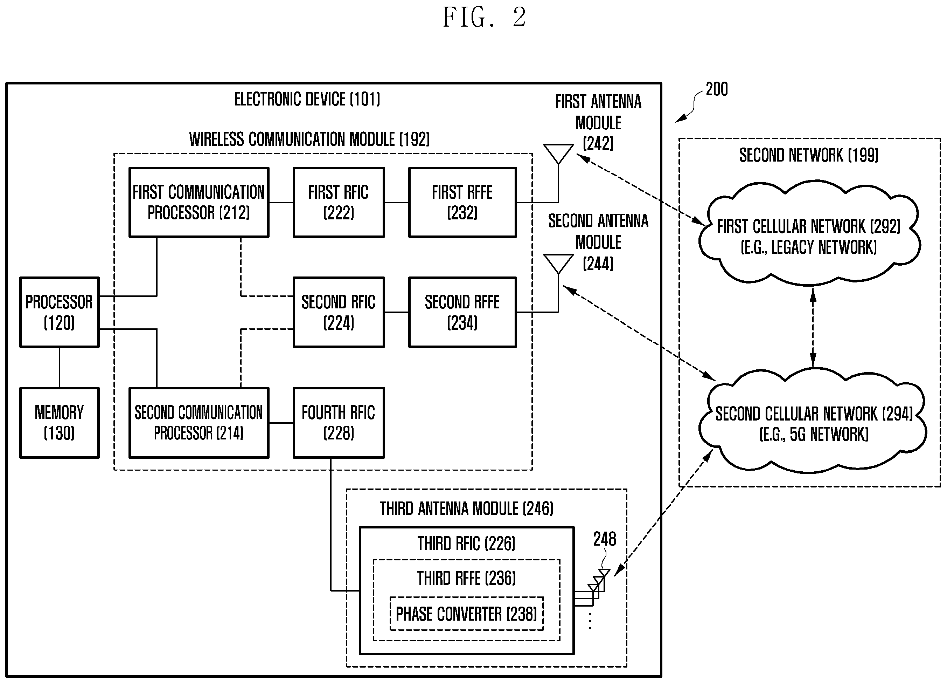

FIG. 2 is a block diagram 200 illustrating an example configuration of an electronic device 101 supporting legacy network communication and 5G network communication according to various embodiments.

Referring to FIG. 2, according to various embodiments, the electronic device 101 may include a first communication processor (e.g., including processing circuitry) 212, a second communication processor (e.g., including processing circuitry) 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may include the processor 120 and the memory 130. The network 199 may include a first network 292 and a second network 294. According to an embodiment, the electronic device 101 may further include at least one component among the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may be at least a part of the wireless communication module 192. According to an embodiment, the fourth RFIC 228 may be omitted, or may be included as a part of the third RFIC 226.

The first communication processor 212 may establish a communication channel of a band to be used for wireless communication with the first network 292, and may support legacy network communication via the established communication channel. According to an embodiment, the first network may be a legacy network including second generation (2G), third generation (3G), fourth generation (4G), or long-term evolution (LTE) network. The second communication processor 214 may establish a communication channel corresponding to a designated band (e.g., approximately 6 GHz to 60 GHz) among bands to be used for wireless communication with the second network 294, and may support 5G network communication via the established communication channel. According to an embodiment, the second network 294 may be a 5G network (e.g., new radio (NR)) defined in 3GPP. In addition, according to an embodiment, the first communication processor 212 or the second communication processor 214 may establish a communication channel corresponding to another designated band (e.g., approximately 6 GHz or less) among bands to be used for wireless communication with the second network 294, and may support 5G network communication via the established communication channel. According to an embodiment, the first communication processor 212 and the second communication processor 214 may be implemented in a single chip or a single package. According to an embodiment, the first communication processor 212 or the second communication processor 214 may be implemented in a single chip or a single package, together with the processor 120, the sub-processor 123, or the communication module 190.

In the case of transmission, the first RFIC 222 may convert a baseband signal generated by the first communication processor 212 into a radio frequency (RF) signal in the range of approximately 700 MHz to 3 GHz, which is used in the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal into a baseband signal so that the baseband signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) in an Sub6 band (e.g., approximately 6 GHz or less) used in the second network 294 (e.g., a 5G network). In the case of reception, a 5G Sub6 RF signal may be obtained from the second network 294 (e.g., a 5G network) via an antenna (e.g., the second antenna module 244), and may be preprocessed by an RFFE (e.g., the second RFFE 234). The second RFIC 224 may convert the preprocessed 5G Sub6 RF signal into a baseband signal so that the signal may be processed by a corresponding communication processor among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6 GHz to 60 GHz) to be used in the second network 294 (e.g., a 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal into a baseband signal so that the signal is processed by the second communication processor 214. According to an embodiment, the third RFFE 236 may be implemented as a part of the third RFIC 226.

According to an embodiment, the electronic device 101 may include the fourth RFIC 228, separately from or, as a part of, the third RFIC 226. In this instance, the fourth RFIC 228 may convert a baseband signal produced by the second communication processor 214 into an RF signal (hereinafter, an IF signal) in an intermediate frequency band (e.g., approximately 9 GHz to 11 GHz), and may transfer the IF signal to the third RFIC 226. The third RFIC 226 may convert the IF signal into a 5G Above6 RF signal. In the case of reception, a 5G Above6 RF signal may be received from the second network 294 (e.g., a 5G network) via an antenna (e.g., the antenna 248), and may be converted into an IF signal by the third RFIC 226. The fourth RFIC 228 may convert the IF signal into a baseband signal so that the second communication processor 214 is capable of processing the baseband signal.

According to an embodiment, the first RFIC 222 and the second RFIC 224 may be implemented as at least a part of a single chip or a single package. According to an embodiment, the first RFFE 232 and the second RFFE 234 may be implemented as at least a part of a single chip or single package. According to an embodiment, at least one of the first antenna module 242 or the second antenna module 244 may be omitted or may be combined with another antenna module, to process RF signals of a plurality of corresponding bands.

According to an embodiment, the third RFIC 226 and the antenna 248 may be disposed in the same substrate, and may form a third antenna module 246. For example, the wireless communication module 192 or the processor 120 may be disposed in a first substrate (e.g., a main PCB). In this instance, the third RFIC 226 is disposed in a part (e.g., a lower part) of a second substrate (e.g., a sub PCB) different from the first substrate, and the antenna 248 is disposed in another part (e.g., an upper part), so that the third antenna module 246 may be formed. By disposing the third RFIC 226 and the antenna 248 in the same substrate, the length of a transmission line therebetween may be reduced. For example, this may reduce a loss (e.g., a diminution) of a high-frequency band signal (e.g., approximately 6 GHz to 60 GHz) used for 5G network communication, the loss being caused by a transmission line. Accordingly, the electronic device 101 may improve the quality or speed of communication with the second network 294 (e.g., a 5G network).

According to an embodiment, the antenna 248 may be implemented as an antenna array including a plurality of antenna elements which may be used for beamforming. In this instance, the third RFIC 226, for example, may include a plurality of phase shifters 238 corresponding to a plurality of antenna elements, as a part of the third RFFE 236. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of a 5G Above6 RF signal received from the outside via a corresponding antenna element into the same or substantially the same phase. This may enable transmission or reception via beamforming between the electronic device 101 and the outside.

The second network 294 (e.g., a 5G network) may operate independently (e.g., Standalone (SA)) from the first network 292 (e.g., a legacy network), or may operate by being connected thereto (e.g., Non-Standalone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access the access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., new radio (NR) protocol information) for communication with the 5G network may be stored in the memory 130, and may be accessed by another component (e.g., the processor 120, the first communication processor 212, or the second communication processor 214).

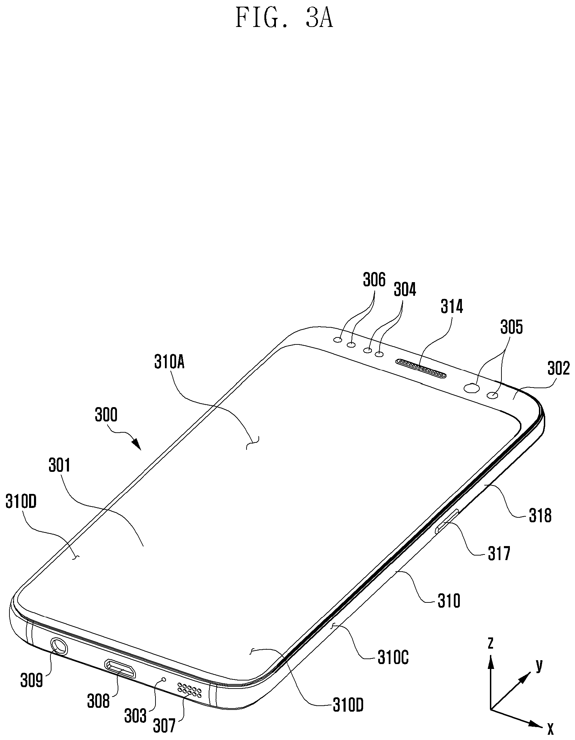

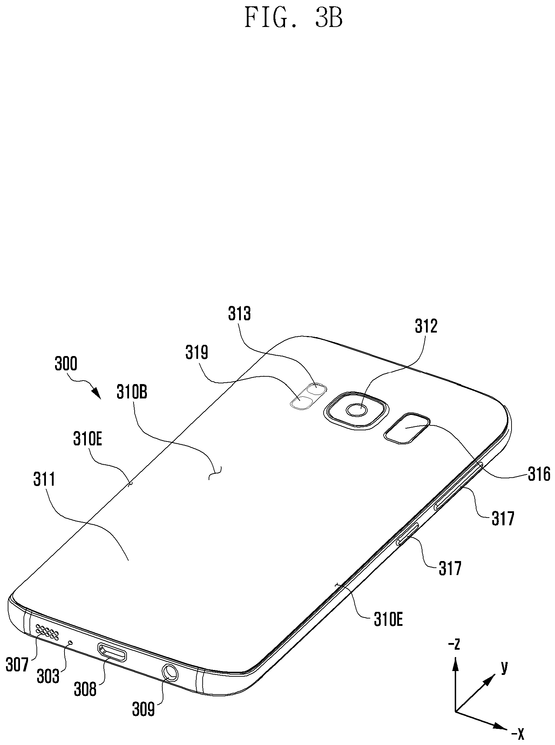

FIG. 3A is a perspective view of an electronic device 300 according to various embodiments. FIG. 3B is a rear perspective view of the electronic device 300 according to various embodiments.

Referring to FIGS. 3A and 3B, the electronic device 300 (e.g., the electronic device 101 in FIG. 1) according to various embodiments may include a housing 310 including a first surface (or front surface) 310A, a second surface (or rear surface) 310B, and a side surface 310C surrounding the space (or inner space) between the first surface 310A and the second surface 310B. In an embodiment (not shown), the housing may refer to a structure forming some of the first surface 310A, the second surface 310B, and the side surface 310C. According to an embodiment, the first surface 310A may be formed by a front plate 302 (e.g., a glass plate including various coating layers, or a polymer plate), at least a portion of which is substantially transparent. The second surface 310B may be formed by a substantially opaque rear plate 311. The rear plate 311 may be formed of, for example, coated or colored glass, ceramic, polymer, metal (e.g., aluminum, stainless steel (STS), or magnesium), or a combination of at least two of the foregoing materials. The side surface 310C may be coupled to the front plate 302 and the rear plate 311, and may be formed by a side bezel structure (or "a lateral member") 318 including metal and/or polymer. In an embodiment, the rear plate 311 and the side bezel structure 318 may be integrally formed, and may include the same material (e.g., a metal material such as aluminum).

In the illustrated embodiment, the front plate 302 may include two first areas 310D, which are curved and seamlessly extended from the first surface 310A toward the rear plate 311, at both ends of the long edge of the front plate 302. In the illustrated embodiment (see FIG. 3B), the rear plate 311 may include two second areas 310E, which are curved and seamlessly extended from the second surface 310B toward the front plate 302, at both ends of the long edge. In an embodiment, the front plate 302 (or the rear plate 311) may include only one of the first areas 310D (or the second areas 310E). In an embodiment, the front plate 302 (or the rear plate 311) may not include some of the first areas 310D (or the second areas 310E). In an embodiment, when viewed from the side of the electronic device 300, the side bezel structure 318 may have a first thickness (or width) on a side surface that does not include the first area 310D or the second area 310E, and may have a second thickness thinner than the first thickness on a side surface including the first region 310D or the second region 310E.

According to an embodiment, the electronic device 300 may include at least one among a display 301, audio modules 303, 307, and 314, sensor modules 304, 316, and 319, camera modules 305, 312, and 313, key input devices 317, a light-emitting element 306, and a connector holes 308 and 309. In an embodiment, in the electronic device 300, at least one (e.g., the key input devices 317 or the light-emitting element 306) of the elements may be omitted, or other elements may be additionally included.

The display 301 may be visually exposed, for example, through a significant portion of the front plate 302. In an embodiment, at least a portion of the display 301 may be visually exposed through the front plate 302 forming the first surface 310A and a first area 310D of the side surface 310C. In an embodiment, the edge of the display 301 may be formed to be substantially identical to the shape of an adjacent outer periphery of the front plate 302. In an embodiment (not shown), in order to enlarge the exposed area of the display 301, the distance between the outer periphery of the display 301 and the outer periphery of the front plate 302 may be substantially formed equally.

In an embodiment (not shown), in a portion of the screen display area of the display 301 may have a recess or an opening formed therein, and may include at least one among the audio module 314, the sensor module 304, the camera module 305, and the light-emitting element 306, which are aligned with the recess or the opening. In an embodiment (not shown), at least one among the audio module 314, the sensor module 304, the camera module 305, a fingerprint sensor 316, and the light-emitting element 306 may be included in the rear surface of the screen display area of the display 301. In an embodiment (not shown), the display 101 may be combined with or disposed adjacent to a touch sensing circuit, a pressure sensor capable of measuring the strength (e.g., pressure) of a touch, and/or a digitizer for detecting a magnetic field-type stylus pen. In an embodiment, at least some of the sensor modules 304 and 319 and/or at least some of the key input devices 317 may be disposed in the first area 310D and/or a second area 310E.

The audio modules 303, 307, and 314 may include a microphone hole 303 and speaker holes 307 and 314. A microphone for acquiring external sound may be disposed in the microphone hole 303, and in an embodiment, multiple microphones may be disposed to detect the direction of sound. The speaker holes 307 and 314 may include an external speaker hole 307 and a receiver hole 314 for communication. In an embodiment, the speaker holes 307 and 314 and the microphone hole 303 may be implemented as a single hole, or a speaker (e.g., a piezo speaker) may be included without the speaker holes 307 and 314.

The sensor modules 304, 316, and 319 may generate electrical signals or data values corresponding to an internal operation state of the electronic device 300 or an external environmental state. The sensor modules 304, 316, and 319 may include, for example, a first sensor module 304 (e.g., a proximity sensor) and/or a second sensor module (not shown) (e.g., a fingerprint sensor), disposed on the first surface 310A of the housing 310, and/or a third sensor module 319 (e.g., an HRM sensor) and/or a fourth sensor module 316 (e.g., a fingerprint sensor), disposed on the second surface 310B of the housing 310. The fingerprint sensor may be disposed on the second surface 310B as well as the first surface 310A (e.g., the display 301) of the housing 310. The electronic device 300 may further include an unillustrated sensor module, for example, at least one of a gesture sensor, a gyro sensor, a barometric pressure sensor, a magnetic sensor, an acceleration sensor, a grip sensor, a color sensor, an infrared (IR) sensor, a biosensor, a temperature sensor, a humidity sensor, or an illuminance sensor 304.

The camera modules 305, 312, and 313 may include a first camera device 305, disposed on the first surface 310A of the electronic device 300, and a second camera device 312 and/or a flash 313, disposed on the second surface 310B. The camera module 305 or 312 may include one or multiple lenses, an image sensor, and/or an image signal processor. The flash 313 may include, for example, a light emitting diode or a xenon lamp. In an embodiment, two or more lenses (infrared camera, wide-angle, and telephoto lenses) and image sensors may be disposed on one side of the electronic device 300.

The key input devices 317 may be disposed on the side surface 310C of the housing 310. In an embodiment, the electronic device 300 may not include some or all of the key input devices 317, and the key input devices 317 that are not included may be implemented in the form of soft keys on the display 301. In an embodiment, the key input devices 317 may include a sensor module 316 disposed on the second surface 310B of the housing 310.

The light-emitting element 306 may be disposed, for example, on the first surface 310A of the housing 310. The light-emitting element 306 may provide, for example, state information of the electronic device 300 in the form of light. In an embodiment, the light-emitting element 306 may provide, for example, a light source interoperating with the operation of the camera module 305. The light-emitting element 306 may include, for example, an LED, an IR LED, and a xenon lamp.

The connector holes 308 and 309 may include a first connector hole 308 capable of accommodating a connector (e.g., a USB connector) for transmitting and receiving power and/or data to and from an external device (or external electronic device), and/or, a second connector hole (e.g., an earphone jack) 309 capable of accommodating a connector for transmitting and receiving audio signals to and from an external device.

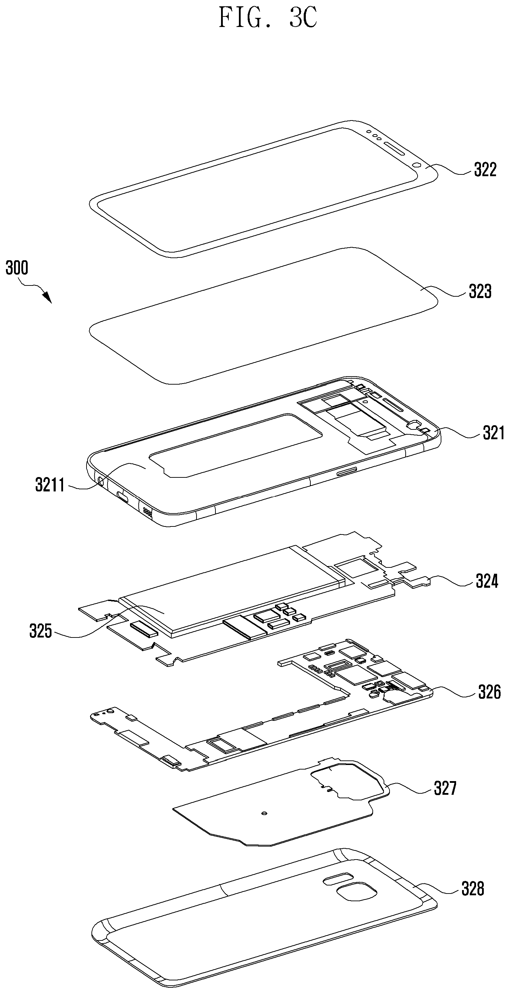

FIG. 3C is an exploded perspective view of an electronic device 300 according to various embodiments.

Referring to FIG. 3C, the electronic device 300 may include a lateral bezel structure 321, a first support member 3211 (e.g., a bracket), a front plate 322, a display 323, a printed circuit board 324, a battery 325, a second support member 326 (e.g., a rear case), an antenna 327, and a rear plate 328. In an embodiment, in the electronic device 300, at least one (e.g., the first support member 3211 or the second support member 326) of the elements may be omitted, or other elements may be additionally included. At least one of the elements of the electronic device 300 may be identical or similar to at least one of the elements of the electronic device 300 in FIG. 3A or 3B, and redundant descriptions will be omitted below.

The first support member 3211 may be disposed in the electronic device 300 and connected to the lateral bezel structure 321, or may be formed integrally with the lateral bezel structure 321. The first support member 3211 may be formed of, for example, a metal material and/or a non-metal (e.g., polymer) material. The first support member 3211 may have one surface coupled to the display 323 and the other surface coupled to the printed circuit board 324. A processor (e.g., the processor 120 in FIG. 1), a memory (e.g., the memory 130 in FIG. 1), and/or an interface (e.g., the interface 177 in FIG. 1) are mounted on the printed circuit board 324. The processor may include, for example, one or more of a central processing unit, an application processor, a graphics processing unit, an image signal processor, a sensor hub processor, or a communication processor.

The memory may include, for example, volatile memory (e.g., the volatile memory 132 in FIG. 1) or non-volatile memory (e.g., the non-volatile memory 134 in FIG. 1).

The interface may include, for example, a high-definition multimedia interface (HDMI), a universal serial bus (USB) interface, an SD card interface, and/or an audio interface. The interface may electrically or physically connect the electronic device 300 to an external device, and may include a USB connector, an SD card/MMC connector, or an audio connector.

The battery 325 may be a device for supplying power to at least one element of the electronic device 300, and may include, for example, a non-rechargeable primary battery, a rechargeable secondary battery, or a fuel cell. At least a portion of the battery 325 may be disposed substantially coplanar with the printed circuit board 324, for example. The battery 325 may be integrally disposed in the electronic device 300, or may be disposed to be detachable from the electronic device 300.

The antenna 327 may be disposed between the rear plate 328 and the battery 325. The antenna 327 may include, for example, a near-field communication (NFC) antenna, a wireless charging antenna, and/or a magnetic secure transmission (MST) antenna. The antenna 327 may, for example, perform short-range communication with an external device (or external electronic device) or wirelessly transmit or receive power required for charging. In an embodiment, an antenna structure may be formed by a portion of the lateral bezel structure 321 and/or a portion of the first support member 3211 or a combination thereof.

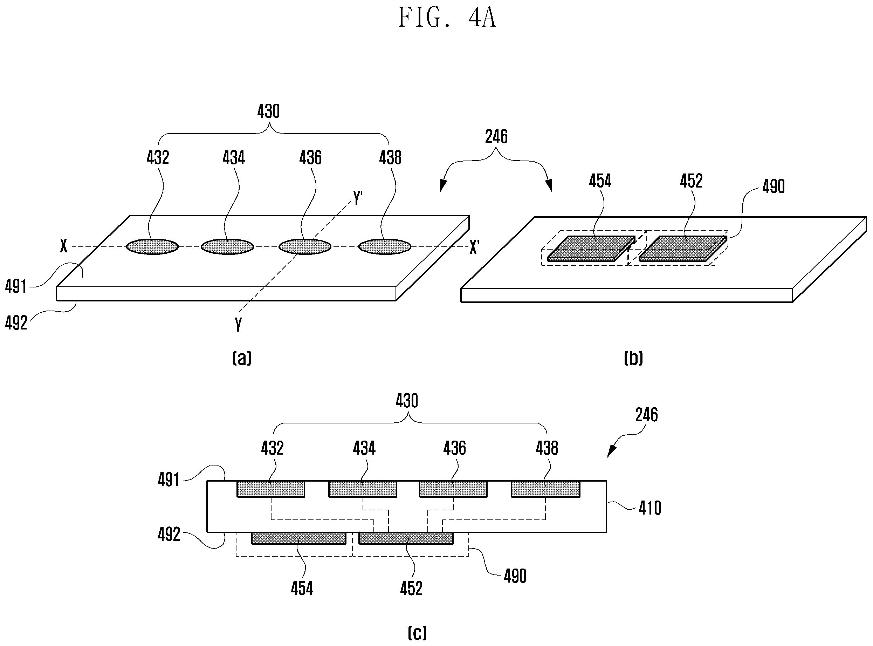

FIG. 4A illustrates an embodiment of the structure of the third antenna module 246 described with reference to FIG. 2. FIG. 4A(a) is a perspective view of the third antenna module 246 viewed from one side, and FIG. 4A(b) is a perspective view of the third antenna module 246 viewed from the other side. FIG. 4A(c) is a cross-sectional view of the third antenna module 246, taken along line X-X'.

Referring to FIG. 4A, in an embodiment, the third antenna module 246 may include a printed circuit board 410, an antenna array 430, a radio-frequency integrated circuit (RFIC) 452, and a power management integrated circuit (PMIC) 454. Selectively, the third antenna module 246 may further include a shielding member 490. In other embodiments, at least one of the components included in the third antenna module 246 may be omitted, or at least two of the components included in the third antenna module 246 may be integrally formed.

The printed circuit board 410 may include multiple conductive layers and multiple non-conductive layers alternately stacked with the conductive layers. The printed circuit board 410 may provide an electrical connection between the printed circuit board 410 and/or various externally arranged electronic components by using wires and conductive vias formed on the conductive layers.

The antenna array 430 (e.g., the antenna 248 in FIG. 2) may include multiple antenna elements 432, 434, 436, or 438 arranged to form a directional beam. The antenna elements 432, 434, 436, or 438 may be formed on a first surface 491 of the printed circuit board 410 as illustrated. According to another embodiment, the antenna array 430 may be formed in the printed circuit board 410. According to embodiments, the antenna array 430 may include multiple antenna arrays (e.g., a dipole antenna array and/or a patch antenna array) of identical or different shapes or types.

The RFIC 452 (e.g., the third RFIC 226 in FIG. 2) may be disposed in another area (e.g., a second surface 492 opposite the first surface 491) of the printed circuit board 410, spaced apart from the antenna array 430. The RFIC 452 is configured to process signals of a selected frequency band that are transmitted and/or received through the antenna array 430. According to an embodiment, at the time of transmission, the RFIC 452 may convert a baseband signal obtained from a communication processor (not shown) into an RF signal of a designated band. At the time of reception, the RFIC 452 may convert an RF signal received through the antenna array 430 into a baseband signal and may transmit the baseband signal to the communication processor.

According to another embodiment, at the time of transmission, the RFIC 452 may up-convert an IF signal (e.g., from about 9 GHz to 11 GHz) obtained from an intermediate frequency integrated circuit (IFIC) (e.g., the fourth RFIC 228 in FIG. 2) into an RF signal of a selected band. At the time of reception, the RFIC 452 may down-convert the RF signal obtained through the antenna array 430 into an IF signal, and may transmit the IF signal to the IFIC.

The PMIC 454 may be disposed in another partial area (e.g., the second surface 492) of the printed circuit board 410, spaced apart from the antenna array 430. The PMIC 454 may receive a voltage from a main PCB (not shown) and may provide necessary power to various components (e.g., the RFIC 452) on the antenna module.

The shielding member 490 may be disposed on a portion (e.g., the second surface 492) of the printed circuit board 410 to electromagnetically shield at least one of the RFIC 452 and the PMIC 454. According to an embodiment, the shielding member 490 may include a shield can.

Although not illustrated, in various embodiments, the third antenna module 246 may be electrically connected to another printed circuit board (e.g., a main circuit board) through a module interface. The module interface may include a connection member, for example, a coaxial cable connector, a board-to-board connector, an interposer, or a flexible printed circuit board (FPCB). The RFIC 452 and/or the PMIC 454 of the antenna module may be electrically connected to the printed circuit board 410 through the connecting member.

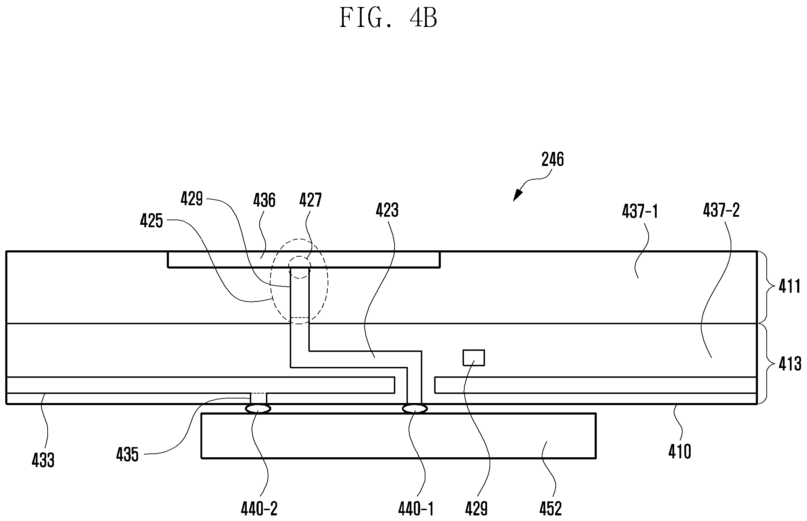

FIG. 4B illustrates a cross section taken along line Y-Y' of the third antenna module 246 illustrated in FIG. 4A(a). The printed circuit board 410 of the illustrated embodiment may include an antenna layer 411 and a network layer 413.

Referring to FIG. 4B, the antenna layer 411 may include at least one dielectric layer 437-1, and an antenna element 436 and/or a feeder 425, formed on or inside the outer surface of the dielectric layer. The feeder 425 may include a feeding point 427 and/or a feeding line 429.

The network layer 413 may include at least one dielectric layer 437-2, and at least one ground layer 433, at least one conductive via 435, a transmission line 423, and/or a signal line 439, formed on or inside the outer surface of the dielectric layer.

In addition, in the illustrated embodiment, the RFIC 452 (e.g., the third RFIC 226 in FIG. 2) shown in FIG. 4A(c) may be electrically connected to the network layer 413 through, for example, a first connection unit (a solder bump) 440-1 and a second connection unit 440-2. In other embodiments, various connection structures (e.g., solder or BGA) may be used instead of the connection units. The RFIC 452 may be electrically connected to the antenna element 436 through the first connection unit 440-1, the transmission line 423, and the feeder 425. The RFIC 452 may also be electrically connected to the ground layer 433 through the second connection unit 440-2 and the conductive via 435. Although not illustrated, the RFIC 452 may be electrically connected to the above-mentioned module interface through the signal line 439.

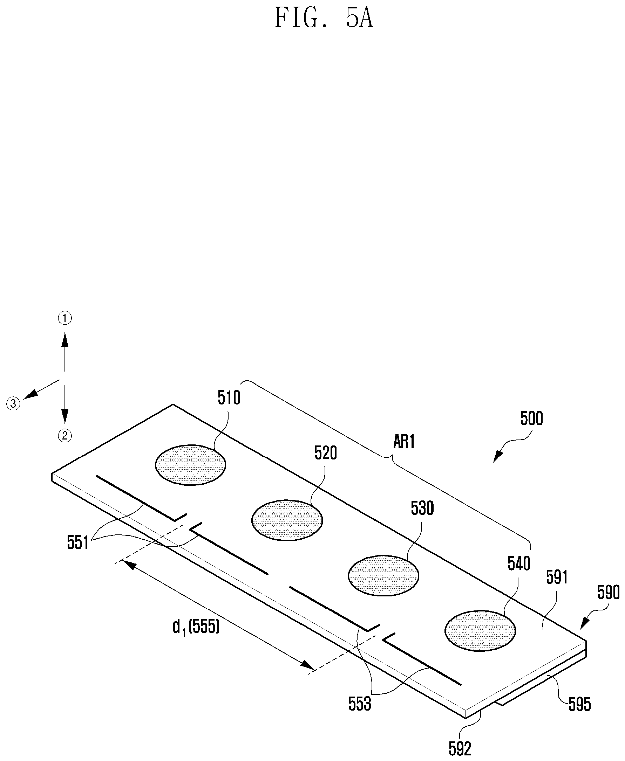

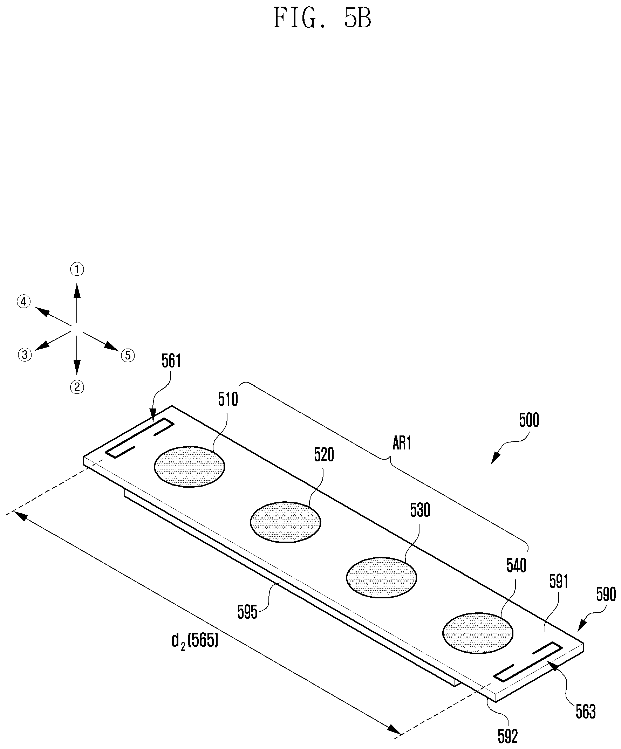

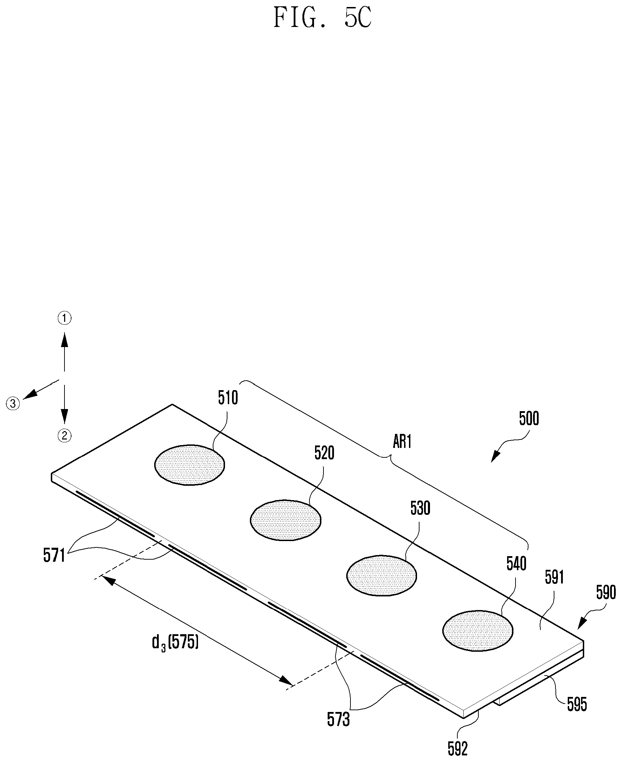

FIGS. 5A, 5B, and 5C are examples of a perspective view of an antenna module 500 according to various embodiments of the disclosure. According to an embodiment, the antenna module 500 in FIGS. 5A, 5B, and 5C may be at least partially similar to the third antenna module 246 in FIG. 2, 4A, or 4B, or may further include other embodiments.

According to various embodiments, the antenna module 500 may include an array antenna AR1 including multiple conductive patches 510, 520, 530, and/or 540. According to an embodiment, the multiple conductive patches 510, 520, 530, and/or 540 may be disposed on a printed circuit board 590. According to an embodiment, the printed circuit board 590 may include a first surface 591 facing a first direction (direction ①) and a second surface 592 facing a direction (direction ②) opposite to the direction faced by the first surface 591. According to an embodiment, the array antenna AR1 may be disposed on an antenna layer (e.g., the antenna layer 411 in FIG. 4B) of the printed circuit board 590. According to an embodiment, the antenna module 500 may include a wireless communication circuit 595 (e.g., the third RFIC 226 in FIG. 2) disposed on the second surface 592 of the printed circuit board 590. According to an embodiment, the multiple conductive patches 510, 520, 530, and/or 540 may be electrically connected to the wireless communication circuit 595. According to an embodiment, the wireless communication circuit 595 may be configured to transmit and/or receive radio frequencies in a range of about 1.8 GHz and/or 3 GHz to 100 GHz through the array antenna AR1. For example, the wireless communication circuit 595 may be configured to transmit and/or receive signals of a first communication scheme through the array antenna AR1. For example, the first communication scheme may include a 5G mobile communication scheme (e.g., new radio (NR)) and/or a wireless communication scheme of a high-frequency (e.g., mmWave) band.

According to various embodiments, the multiple conductive patches 510, 520, 530, and/or 540 may include a first conductive patch 510, a second conductive patch 520, a third conductive patch 530, and/or a fourth conductive patch 540, disposed on the first surface 591 of the printed circuit board 590 or in an area adjacent to the first surface 591 inside the printed circuit board 590. The conductive patches 510, 520, 530, and/or 540 may have substantially the same configuration. For example, the conductive patches 510, 520, 530, and/or 540 may be arranged at regular intervals. The antenna module 500 according to an exemplary embodiment of the disclosure has been illustrated and described as including the array antenna AR1 which includes four conductive patches 510, 520, 530, and 540, but the disclosure is not limited thereto. For example, the antenna module 500 may include, as the array antenna AR1, two or more conductive patches (or antenna elements).

Referring to FIG. 5A, the antenna module 500 may include a first antenna 551 and a second antenna 553 of a second communication scheme, disposed apart from the array antenna AR1 on the printed circuit board 590. According to an embodiment, the first antenna 551 and the second antenna 553 are disposed with a distance (e.g., d1 (555)) within one wavelength or half a wavelength of a second frequency band supported by the second communication scheme. For example, the second frequency band may include about 3.735 GHz to about 4.8 GHz, about 6 GHz to about 7.2 GHz, and/or about 7.2 GHz to about 10.2 GHz. For example, when the second frequency band is about 8 GHz, the distance (d) between the first antenna 551 and the second antenna 553 may be configured within about 3.75 cm, which is one wavelength of about 8 GHz. However, the distance (d) between the first antenna 551 and the second antenna 553 may be configured differently based on the second frequency band used in the second communication scheme. For example, the second communication scheme may include an ultra-wideband (UWB) communication scheme as communication for estimating the position of an external device.

According to an embodiment, the first antenna 551 and the second antenna 553 may be disposed to face the same direction (e.g., direction ③). For example, the first antenna 551 or the second antenna 553 may be disposed such that signals of the second communication scheme (e.g., UWB signals) are emitted in direction ① and/or direction ③. According to an embodiment, the first antenna 551 and/or the second antenna 553 may be configured in the form of a dipole, a folded dipole, a loop, or a folded loop. The antenna module 500 according to an exemplary embodiment of the disclosure has been illustrated and described as a structure including two antennas 551 and 553, but the disclosure is not limited thereto. For example, the antenna module 500 may include one antenna or three or more antennas for supporting the second communication scheme.

Referring to FIG. 5B, the antenna module 500 may include a third antenna 561 and a fourth antenna 563 of the second communication scheme, which are disposed to face different directions (e.g., direction ④ or direction ⑤) on the printed circuit board 590 while being spaced apart from the array antenna AR1. According to an embodiment, the third antenna 561 and the fourth antenna 563 are disposed with a distance (e.g., d2 (565)) within one wavelength or half a wavelength of the second frequency band supported by the second communication scheme. According to an embodiment, the third antenna 561 may be disposed such that signals of the second communication scheme (e.g., UWB signals) are emitted in direction ① and/or direction ④. According to an embodiment, the fourth antenna 563 may be disposed such that signals of the second communication scheme (e.g., UWB signals) are emitted in direction ① and/or direction ⑤. According to an embodiment, the third antenna 561 and/or the fourth antenna 563 may be configured in the form of a dipole, folded dipole, a loop, or folded loop. The antenna module 500 according to an exemplary embodiment of the disclosure has been illustrated and described as a structure including two antennas 561 and 563, but the disclosure is not limited thereto. For example, the antenna module 500 may include one antenna or three or more antennas for supporting the second communication scheme.

Referring to FIG. 5C, the antenna module 500 may include a fifth antenna 571 and a sixth antenna 573 of the second communication scheme, disposed inside the printed circuit board 590. According to an embodiment, the fifth antenna 571 and the sixth antenna 573 may be disposed between the first surface 591 and the second surface 592 of the printed circuit board 590. According to an embodiment, the fifth antenna 571 and the sixth antenna 573 may be disposed with a distance (e.g., d3 (575)) within one wavelength or half a wavelength of the second frequency band supported by the second communication scheme. According to an embodiment, the fifth antenna 571 and the sixth antenna 573 may be disposed to face the same direction (e.g., direction ③). For example, the fifth antenna 571 or the sixth antenna 573 may be disposed such that signals of the second communication scheme (e.g., UWB signals) are emitted in direction ①, direction ②, and/or direction ③. According to an embodiment, the fifth antenna 571 and/or the sixth antenna 573 may be configured in the form of a dipole, a folded dipole, a loop, or a folded loop. The antenna module 500 according to an exemplary embodiment of the disclosure has been illustrated and described as a structure including two antennas 571 and 573, but the disclosure is not limited thereto. For example, the antenna module 500 may include one antenna or three or more antennas for supporting the second communication scheme.

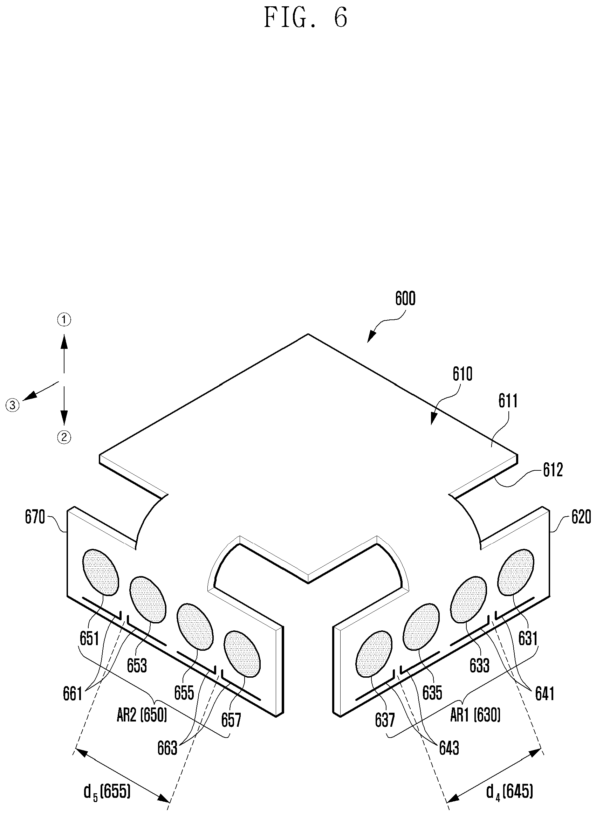

FIG. 6 illustrates a configuration of an antenna module including multiple array antennas according to various embodiments of the disclosure. According to an embodiment, an antenna module 600 in FIG. 6 may be at least partially similar to the third antenna module 246 in FIG. 2, 4A or 4B, or may further include other embodiments.

Referring to FIG. 6, the antenna module 600 may include a first array antenna (AR1) 630 including multiple conductive patches 631, 633, 635, and/or 637, and a second array antenna (AR2) 650) including multiple conductive patches 651, 653, 655 and/or 657. According to an embodiment, a printed circuit board 610 may be electrically connected to a first sub board 620, on which the first array antenna 630 is disposed, and a second sub board 670, on which the second array antenna 650 is disposed, through electrical connection members. For example, the electrical connection members may include a radio frequency (RF) coaxial cable or a flexible printed circuit board (FPCB) type RF cable (FRC). According to an embodiment, the printed circuit board 610 may include the first sub board 620 and/or the second sub board 670. For example, when the printed circuit board 610 is formed as a rigid flexible printed circuit board, the printed circuit board 610 may include the first sub board 620 and/or the second sub board 670.

According to an embodiment, the multiple conductive patches 631, 633, 635, and/or 637 included in the first array antenna 630 may be formed on the first sub board 620. According to an embodiment, the multiple conductive patches 651, 653, 655 and/or 657 included in the second array antenna 650 may be formed on the second sub board 670. According to an embodiment, the printed circuit board 610 may include a first surface 611 facing a first direction (direction ①) and a second surface 612 facing a direction (direction ②) opposite to the direction faced by the first surface 611. According to an embodiment, the antenna module 600 may include a wireless communication circuit (e.g., the third RFIC 226 in FIG. 2) disposed on the first surface 611 or the second surface 612 of the printed circuit board 610. According to an embodiment, the multiple conductive patches 631, 633, 635, and/or 637 disposed on the first sub board 620 and the multiple conductive patches 651, 653, 655 and/or 657 disposed on the second sub board 670 may be electrically connected to the wireless communication circuit. According to an embodiment, the wireless communication circuit may be configured to transmit and/or receive a radio frequency of a first frequency band (e.g., about 1.8 GHz and/or 3 GHz to 100 GHz) through the first array antenna 630 and/or the second array antenna 650. For example, the wireless communication circuit 595 may be configured to transmit and/or receive signals of a first communication scheme through the first array antenna 630 and/or the second array antenna 650. For example, the first communication scheme may include a 5G mobile communication scheme (e.g., new radio (NR)) and/or a high-frequency (e.g., mmWave) band communication scheme.

According to various embodiments, the multiple conductive patches 631, 633, 635, and/or 637 included in the first array antenna 630 may be disposed on one surface of the first sub board 620 or inside the first sub board 620. For example, the conductive patches 631, 633, 635, and/or 637 may be arranged at regular intervals. In one example, the multiple conductive patches 631, 633, 635, and/or 637 may have substantially the same configuration (e.g., size, shape, thickness, and/or material).

According to various embodiments, the multiple conductive patches 651, 653, 655 and/or 657 included in the second array antenna 650 may be disposed on one surface of the second sub board 670 or inside the second sub board 670. For example, the conductive patches 651, 653, 655, and/or 657 may be arranged at regular intervals. In one example, the multiple conductive patches 651, 653, 655 and/or 657 may have substantially the same configuration (e.g., size, shape, thickness, and/or material).

According to various embodiments, the first sub board 620 may include a seventh antenna 641 and an eighth antenna 643 of a second communication scheme, disposed apart from the first array antenna 630. According to an embodiment, the seventh antenna 641 and the eighth antenna 643 may be disposed with a distance (e.g., d4 (645)) within one wavelength or half a wavelength of a second frequency band supported by the second communication scheme in the first sub board 620. According to an embodiment, the seventh antenna 641 and/or the eighth antenna 643 may be configured in the form of a dipole, a folded dipole, a loop, or a folded loop. For example, the second communication scheme may include a UWB communication scheme as communication for estimating the position of an external device.

According to various embodiments, the second sub board 670 may include a ninth antenna 661 and a tenth antenna 663 of the second communication scheme, disposed apart from the second array antenna 650. According to an embodiment, the ninth antenna 661 and the tenth antenna 663 may be disposed with a distance (e.g., d5 (655)) within one wavelength or half a wavelength of the second frequency band supported by the second communication scheme in the second sub board 670. According to an embodiment, the ninth antenna 661 and/or the tenth antenna 663 may be configured in the form of a dipole, a folded dipole, a loop, or a folded loop. For example, the second communication scheme may include a UWB communication scheme as communication for estimating the position of an external device.

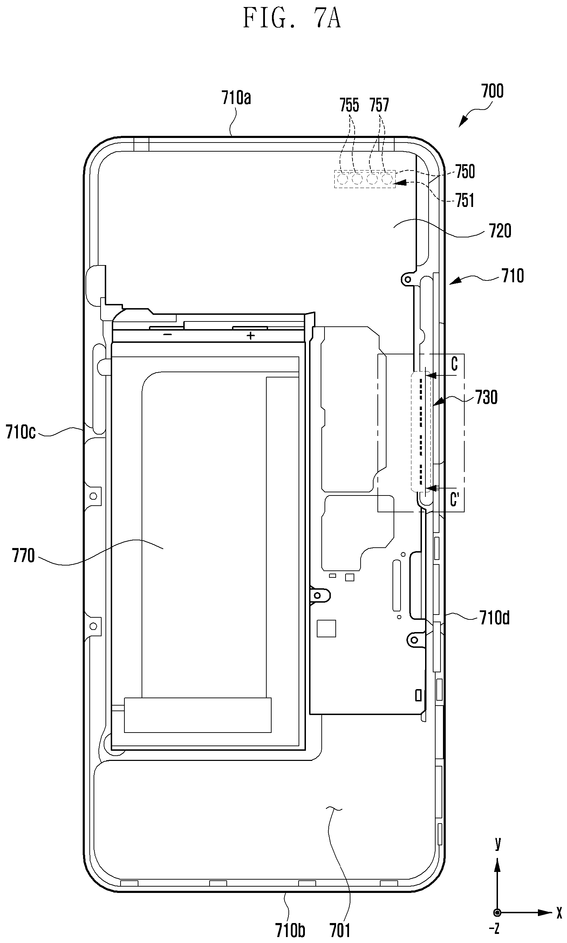

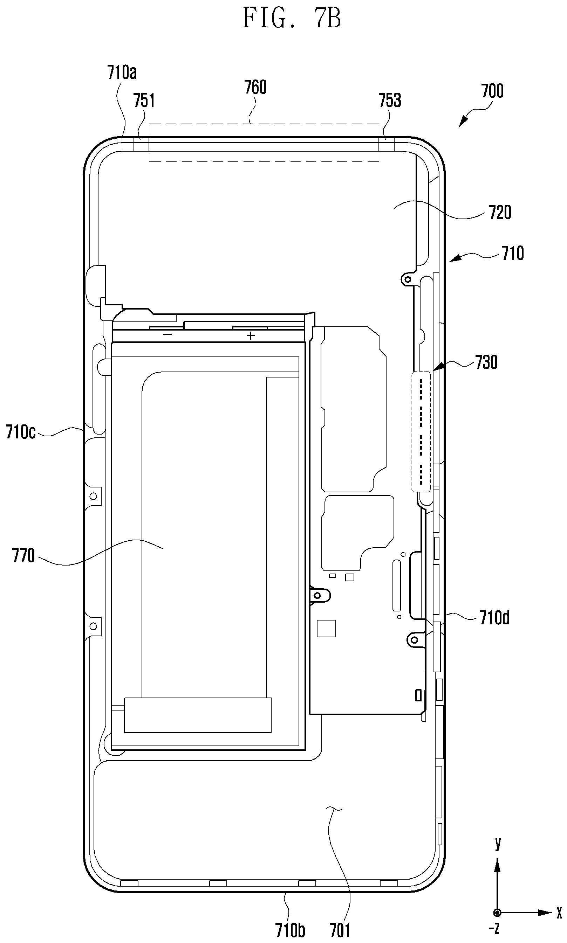

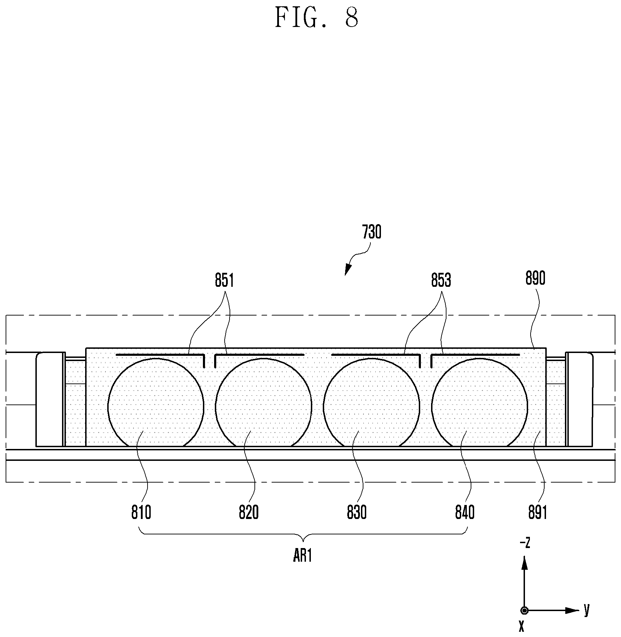

FIGS. 7A and 7B illustrate a state in which an antenna module according to various embodiments of the disclosure is disposed in an electronic device 700. According to an embodiment, the electronic device 700 in FIGS. 7A and 7B may be at least partially similar to the electronic device 101 in FIG. 1 or 2 or the electronic device 300 in FIG. 3A, or may further include other embodiments of the electronic device. FIG. 8 is a partial cross-sectional view of the electronic device 700, taken along line C-C' in FIG. 7A according to various embodiments of the disclosure.

Referring to FIG. 7A, the electronic device 700 may include multiple electronic components disposed in an inner space 701 formed by the electronic device 700. According to an embodiment, the multiple electronic components may include a printed circuit board 720, a first antenna module 730, a second antenna module 750, and/or a battery 770. According to an embodiment, a lateral member 710 surrounding an inner space 701 formed by the electronic device 700 may include a first side surface 710a, a second side surface 710b facing a direction opposite to that of the first side surface 710a, a third side surface 710c perpendicular to the first side surface 710a and the second side surface 710b and longer than the first side surface 710a, and a fourth side surface 710d facing a direction opposite to that of the third side surface 710c.

According to various embodiments, the first antenna module 730 (e.g., the antenna module 500 in FIG. 5A) may be disposed in the inner space 701 of the electronic device 700 such that a first array antenna AR1 (e.g., the conductive patches 810, 820, 830 and/or 840 in FIG. 8) and a first antenna 851 and a second antenna 853 of a second communication scheme face one surface (e.g., the fourth side surface 710d) of the lateral member 710 (e.g., the side surface 310C in FIG. 3A). According to an embodiment, the first antenna module 730 may be located close to the fourth side surface 710d in the inner space 701 such that the longitudinal direction of the fourth side surface 710d is parallel to the arrangement direction of the first array antenna AR1.

According to an embodiment, the first antenna module 730 may include the array antenna AR1 including multiple conductive patches 810, 820, 830 and/or 840 spaced apart from a printed circuit board 890, and the first antenna 851 and the second antenna 853 of the second communication scheme. For example, the multiple conductive patches 810, 820, 830, and 840 may be arranged such that a beam is formed in a direction faced by the fourth side surface 710d (e.g., the X direction). In one example, the multiple conductive patches 810, 820, 830, and 840 may be arranged on a first surface 891 of the printed circuit board 890. According to an embodiment, the first antenna 851 and/or the second antenna 853may be disposed such that a signal of the second communication scheme (e.g., a UWB signal) is emitted in a direction faced by the fourth side surface 710d (e.g., the X direction) and/or in a direction faced by a rear plate (e.g., the rear plate 311 in FIG. 3B) of the electronic device 700 (e.g., the -Z direction in FIG. 3A). For example, the first antenna 851 and/or the second antenna 853 may be disposed on the first surface 891 of the printed circuit board 890.

According to various embodiments, the second antenna module 750 (e.g., the antenna module 500 in FIG. 5A) may be located close to the first side surface 710a in the inner space 701 of the electronic device 700 such that the longitudinal direction of the first side surface 710a is parallel to the arrangement direction of a second array antenna 751. According to an embodiment, multiple conductive patches included in the second array antenna 751 may be disposed such that a beam is formed in the direction faced by the rear plate (e.g., the rear plate 311 in FIG. 3B) of the electronic device 700 (e.g., the -Z direction in FIG. 3A). According to an embodiment, a third antenna 755 and/or a fourth antenna 757 may be disposed such that a signal of the second communication scheme (e.g., a UWB signal) is emitted in a direction faced by the first side surface 710a (e.g., the Y direction) and/or in a direction faced by the rear plate (e.g., the rear plate 311 in FIG. 3B) of the electronic device 700 (e.g., the -Z direction in FIG. 3A).

Referring to FIG. 7B, the electronic device 700 may include multiple electronic components disposed in an inner space 701 formed by the electronic device 700. According to an embodiment, the multiple electronic components may include a printed circuit board 720, a first antenna module 730, and/or a battery 770.

According to various embodiments, a lateral member 710 may include a conductive portion 760 and non-conductive portions 751 and 753 that are at least partially disposed. According to an embodiment, the conductive portion 760 may be formed as a unit conductive portion between a pair of non-conductive portions 751 and 753 (e.g., segmental portions) spaced apart to each other, and thus may operate as an antenna for a second communication scheme (e.g., UWB communication) configured to transmit and/or receive a wireless signal of a second frequency band by a wireless communication circuit disposed in the inner space 701 of the electronic device 700. In another example, the conductive portion 760 of the lateral member 710 is formed as a unit conductive portion between a pair of non-conductive portions 751 and 753 (e.g., segmental portions) spaced apart from each other, and thus may operate as an antenna for a third communication scheme (e.g., long-term evolution (LTE) communication).

The antenna module 730 or 750 according to an exemplary embodiment of the disclosure has been illustrated and described as a structure including two antennas (e.g., 851 and 853 in FIG. 8 or 755 and 757 in FIG. 7A), but the disclosure is not limited thereto. For example, the first antenna module 730 or the second antenna module 750 may include at least one antenna for supporting the second communication scheme.

According to various embodiments, the first antenna module 730 and/or the second antenna module 750 are not limited thereto, and may be disposed in various positions. For example, the first antenna module 730 may be disposed in a position close to the third side surface 710c in the inner space 701 such that the longitudinal direction of the third side surface 710c is parallel to the arrangement direction of the first array antenna AR1. For example, the second antenna module 750 may be disposed in a position close to the second side surface 710b in the inner space 701 such that the longitudinal direction of the second side surface 710b is parallel to the arrangement direction of the second array antenna 751.

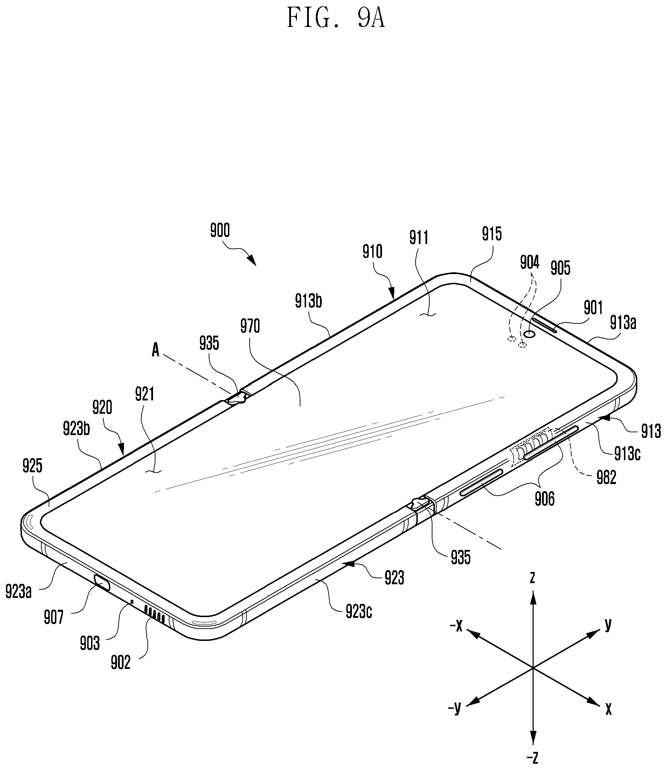

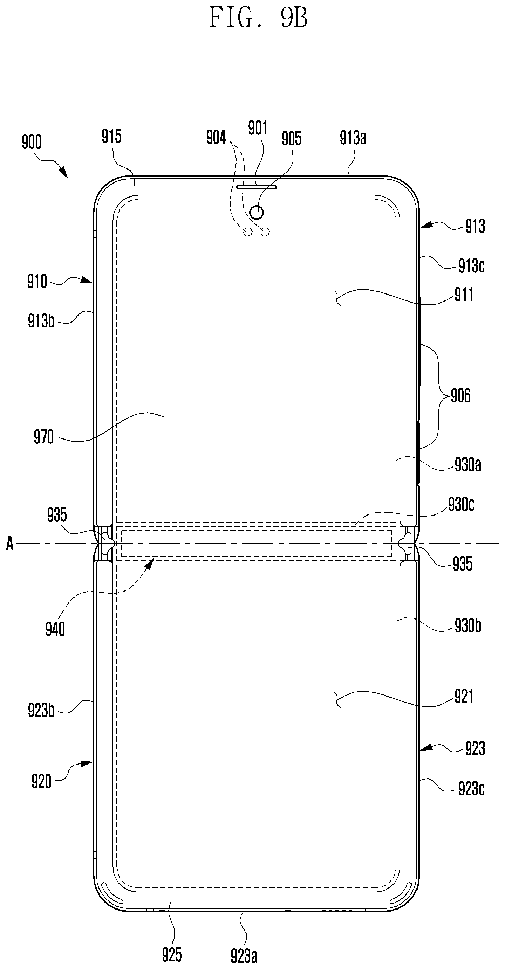

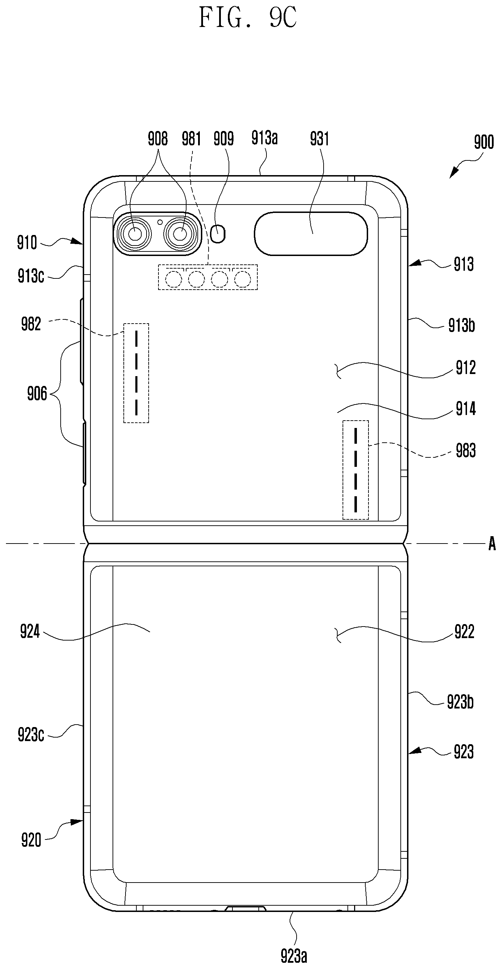

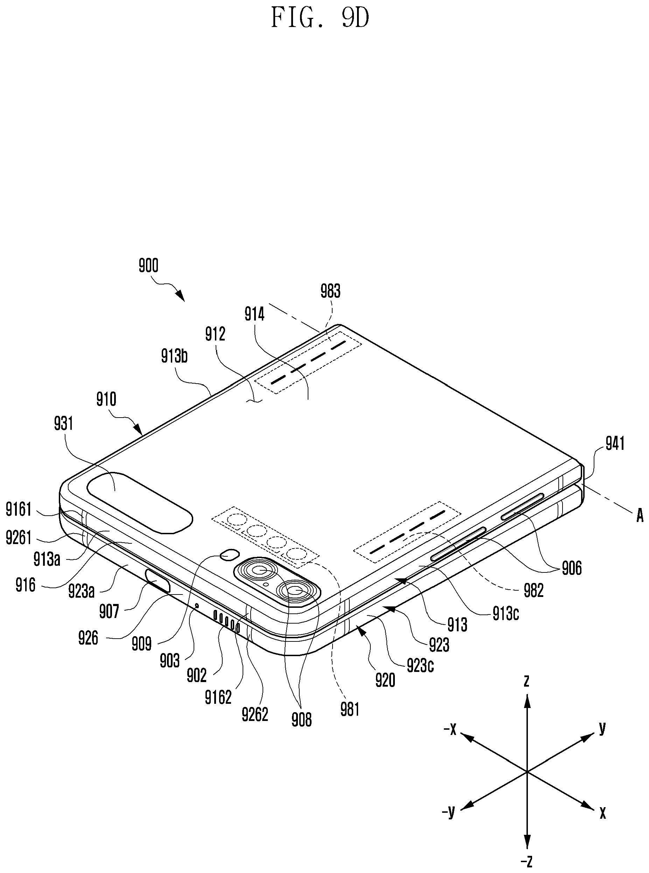

FIG. 9A is a front perspective view of an electronic device 900 illustrating an unfolded state (flat state or unfolding state) according to various embodiments of the disclosure. FIG. 9B is a plan view illustrating the front surface of the electronic device 900 in a flat state according to various embodiments of the disclosure. FIG. 9C is a plan view illustrating the rear surface of the electronic device 900 in a flat state according to various embodiments of the disclosure. FIG 9D illustrates a perspective view of an electronic device 900 in a folded state according to various embodiments of the disclosure. According to an embodiment, the electronic device 900 in FIGS. 9A to 9D may be at least partially similar to the electronic device 101 in FIG. 1 or 2, or may further include other embodiments of the electronic device.

Referring to FIGS. 9A to 9D, the electronic device 900 may include a pair of housings 910 and 920 (e.g., foldable housings) rotatably coupled so as to be folded and face each other with reference to a hinge module (e.g., a hinge module 940 in FIG. 9B). In an embodiment, the hinge module 940 may be disposed in the X-axis direction or in the Y-axis direction. In an embodiment, two or more hinge modules 940 may be arranged to be folded in the same direction or in different directions. According to an embodiment, the electronic device 900 may include a flexible display 970 (e.g., a foldable display) disposed in an area formed by the pair of housings 910 and 920. According to an embodiment, a first housing 910 and a second housing 920 may be disposed on both sides of a folding axis (axis A) and have substantially symmetrical shapes with respect to the folding axis (axis A). According to an embodiment, an angle or a distance between the first housing 910 and the second housing 920 may vary depending on whether the state of the electronic device 900 is an unfolded state (flat state or unfolding state), a folded state (folding state), or an intermediate state.

According to various embodiments, the pair of housings 910 and 920 may include the first housing 910 (e.g., a first housing structure) coupled to the hinge module 940 and the second housing 920 (e.g., a second housing structure) coupled to the hinge module 940. According to an embodiment, in a flat state, the first housing 910 may include a first surface 911 facing a first direction (e.g., a forward direction) (the z-axis direction) and a second surface 912 facing a second direction (e.g., a rearward direction) (the -z-axis direction) opposite to the direction faced by the first surface 911. According to an embodiment, in the flat state, the second housing 920 may include a third surface 921 facing the first direction (the z-axis direction) and a fourth surface 922 facing the second direction (the -z-axis direction). According to an embodiment, the electronic device 900 may operate such that the first surface 911 of the first housing 910 and the third surface 921 of the second housing 912 face substantially the same first direction (the z-axis direction) in a flat state and that the first surface 911 and the third surface 921 face each other in a folded state. For example, the electronic device 900 may operate such that the second surface 912 of the first housing 910 and the fourth surface 922 of the second housing 920 face substantially the same second direction (the -z axis direction) in the flat state and that the second surface 912 and the fourth surface 922 face opposite directions in the folded state. For example, in the folded state, the second surface 912 may face the first direction (the z-axis direction) and the fourth surface 922 may face the second direction (the -z-axis direction) (e.g., in-folding type). According to an embodiment, the electronic device 900 may operate such that the first surface 911 of the first housing 910 and the third surface 921 of the second housing 912 face substantially the same first direction (the z-axis direction) in a flat state and that the first surface 911 and the third surface 921 face opposite directions in a folded state. For example, in a folded state, the first surface 911 may face the first direction (the z-axis direction), and the third surface 922 may face the second direction (the -z-axis direction). For example, the electronic device 900 may operate such that the second surface 912 of the first housing 910 and the fourth surface 922 of the second housing 920 face substantially the same second direction (the -z axis direction) in a flat state and that the second surface 912 and the fourth surface 922 face each other in a folded state (e.g., out-folding type).

According to various embodiments, the first housing 910 may include a first lateral frame 913 at least partially forming the exterior of the electronic device 900, and a first rear cover 914 coupled to the first lateral frame 913 and forming at least a portion of the second surface 912 of the electronic device 900. According to an embodiment, the first lateral frame 913 and the first rear cover 914 may be integrally formed.

According to various embodiments, the second housing 920 may include a second lateral frame 923 at least partially forming the exterior of the electronic device 900, and a second rear cover 924 coupled to the second lateral frame 923 and forming at least a portion of the fourth surface 922 of the electronic device 900. According to an embodiment, the second lateral frame 923 and the second rear cover 924 may be integrally formed.

According to various embodiments, the pair of housings 910 and 920 are not limited to the illustrated shape and coupling, and may be implemented by another shape or combination and/or coupling of components.

According to various embodiments, the first lateral frame 913 and/or the second lateral frame 923 may be formed of metal, or may further include polymer injected into the metal. According to an embodiment, the first lateral frame 913 and/or the second lateral frame 923 may include at least one conductive portion 916 and/or 926 electrically insulated through at least one segmental portion 9161 or 9162 and/or 9261 or 9262 formed of polymer. For example, the at least one conductive portion 916 and/or 926 may be electrically connected to a wireless communication circuit included in the electronic device 900 so as to be used as an antenna (e.g., a UWB antenna) which operates in at least one designated band (e.g., the second frequency band).

According to various embodiments, the first rear cover 914 and/or the second rear cover 924 may be formed of at least one or a combination of at least two of, for example, coated or colored glass, ceramic, polymer or metal (e.g., aluminum, stainless steel (STS), or magnesium).

According to various embodiments, the flexible display 970 may be disposed to extend from the first surface 911 of the first housing 910 to at least a portion of the third surface 921 of the second housing 920. According to an embodiment, the electronic device 900 may include a first protective cover 915 (e.g., a first protective frame or a first decoration member) coupled along an edge of the first housing 910. According to an embodiment, the electronic device 900 may include a second protective cover 925 (e.g., a second protective frame or a second decoration member) coupled along the edge of the second housing 920. According to an embodiment, the first protective cover 915 and/or the second protective cover 925 may be formed of metal, glass, ceramic, or polymer material. According to an embodiment, the first protective cover 915 and/or the second protective cover 925 may be used as a decoration member. According to an embodiment, the flexible display 970 may be positioned such that a protective cap 935 disposed in an area corresponding to the hinge module 940 protects an edge of the flexible display 970 corresponding to the protective cap. Accordingly, the edge of the flexible display 970 may be substantially protected from the outside. According to an embodiment, the electronic device 900 may include a hinge housing 941 (e.g., a hinge cover) which is disposed to support the hinge module 940, be exposed to the outside when the electronic device 900 is in a folded state, and be at least partially inserted into a first space (e.g., the inner space of the first housing 910) and a second space (e.g., the inner space of the second housing 920) when the electronic device 900 is in a flat state.

According to various embodiments, the electronic device 900 may include a sub display 931 disposed separately from the flexible display 970. According to an embodiment, the sub display 931 may be disposed to be visually exposed at least partially on the second surface 912 of the first housing 910, and thus, in a folded state, may replace the display function of the flexible display 970 to display state information of the electronic device 900. According to an embodiment, the sub display 931 may be disposed to be visible from the outside through at least a partial area of the first rear cover 914. In an embodiment, the sub display 931 may be disposed on the fourth surface 922 of the second housing 920. According to an embodiment, the sub display 931 may be disposed to be visible from the outside through at least a partial area of the second rear cover 924.

According to various embodiments, the electronic device 900 may include at least one of a sound input device 903 (e.g., a microphone), sound output devices 901 and 902, sensor modules 904, camera devices 905 and 908, key input devices 906, or a connector port 907. In the illustrated embodiment, the input device 903 (e.g., the microphone), the sound output devices 901 and 902, the sensor modules 904, the camera devices 905 and 908, the key input devices 906, or the connector port 907 may refer to holes formed in the first housing 910 or the second housing 920, but may be defined as including substantial electronic components (e.g., an input device, a sound output device, a sensor module, or a camera device) disposed in the electronic device 900 and operating through holes.

According to various embodiments, some (e.g., a first camera device 905) of the camera devices 905 and 908 or the sensor modules 904 may be disposed to be visually exposed through the flexible display 970. For example, the first camera device 905 or the sensor modules 904 may be disposed in the inner space of the electronic device 900 so as to be in contact with an external environment through an opening (e.g., a through-hole) formed at least partially in the flexible display 970. In another embodiment, some of the sensor modules 904 may be disposed in the inner space of the electronic device 900 so as to perform functions without being visually exposed through the flexible display 970. For example, in this case, an area of the flexible display 970 facing each of the sensor modules may not require an opening.

According to various embodiments, the electronic device 900 may include multiple antenna modules 981, 982 and/or 983 disposed in the first space (e.g., the inner space of the first housing 910) and/or the second space (e.g., the inner space of the second housing 920). According to an embodiment, the electronic device 900 may include a first antenna module 981 disposed in a firsts area (e.g., an upper area) of the first space (or the second space), a second antenna module 982 disposed on a first side surface 913c of the first space and/or a third antenna module 983 disposed on a second side surface 913b of the second space.

According to various embodiments, each of the antenna module 981, 982, and/or 983 may include an antenna array including multiple conductive patches for a first communication scheme, and at least one antenna for a second communication scheme. According to an embodiment, the electronic device 900 may adaptively select, based on the state (e.g., a flat state or a folded state) of the electronic device 900, the antenna module 981, 982, and/or 983 which is to be used to estimate the position of an external device. For example, when the electronic device 900 is in a flat state, the electronic device 900 may use antennas for the second communication scheme, which are included in the first antenna module 981 disposed in the first area (e.g., the upper area) and the second antenna module 982 disposed in the first side surface 913c, to estimate the position of an external device. For example, the electronic device 900 may estimate the position (e.g., three-dimensional position) of an external device, based on a first angle of the external device, calculated based on the phase difference of the antennas included in the first antenna module 981 at a first time point, and a second angle of the external device, calculated based on the phase difference between the antennas included in the second antenna module 982 at a second time point. For example, when the electronic device 900 is in a folded state, the electronic device 900 may use the at least one conductive portion 916 and/or 926 and antennas for the second communication scheme included in the second antenna module 982 to estimate the position of an external device. For example, the electronic device 900 may estimate the position (e.g., three-dimensional position) of an external device, based on a first angle of the external device, calculated based on the phase difference between the antennas included in the second antenna module 982 at a first time point, and a second angle of the external device, calculated based on the phase difference between any one antenna included in the second antenna module 982 and the conductive portion 916 and/or 926 at a second time point.

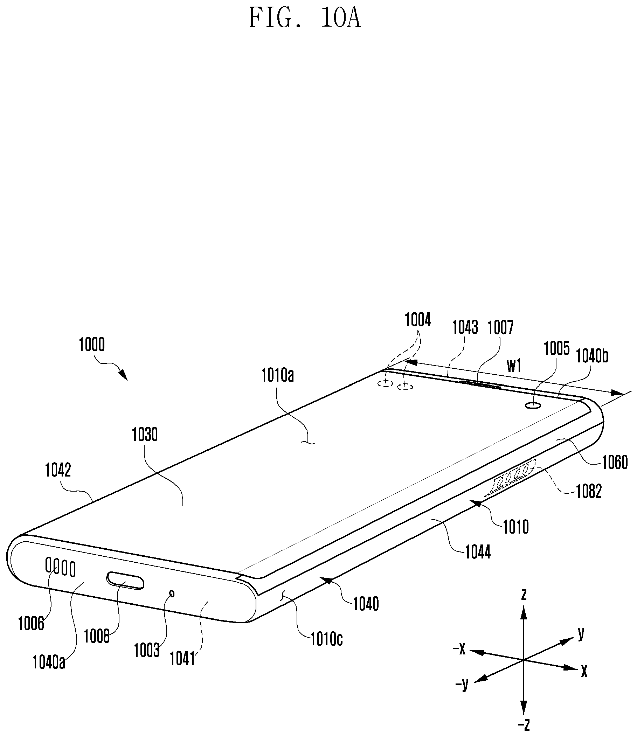

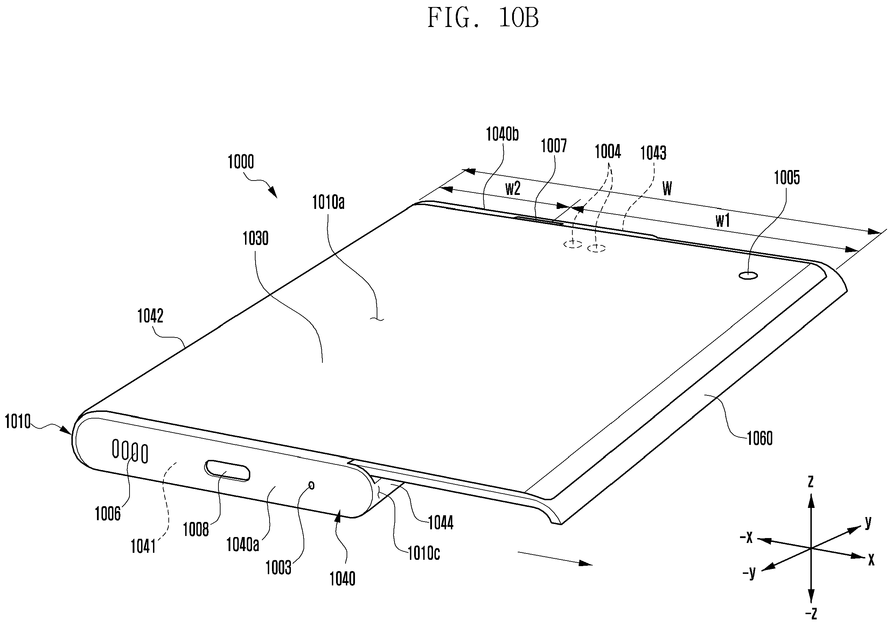

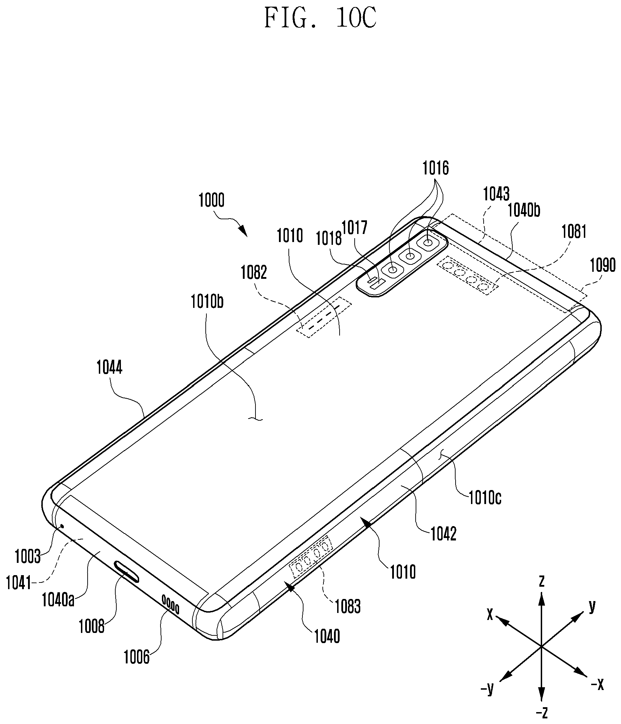

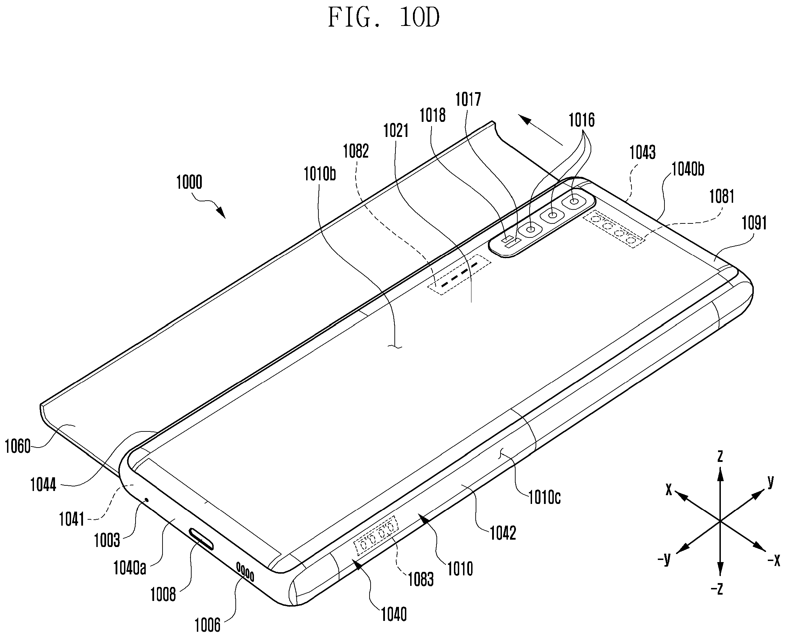

FIGS. 10A and 10B illustrate front perspective views of an electronic device 1000 in a closed state and an opened state according to various embodiments of the disclosure. FIGS. 10C and 10D illustrate rear perspective views of the electronic device 1000 in a closed state and an opened state according to various embodiments of the disclosure. According to an embodiment, the electronic device 1000 in FIGS. 10A to 10D may be at least partially similar to the electronic device 101 in FIG. 1 or 2 or may further include other embodiments of the electronic device.

Referring to FIGS. 10A to 10D, the electronic device 1000 may include a housing 1040 (e.g., a lateral frame) and a slide plate 1060 coupled to be at least partially movable from the housing 1040 and supporting at least a portion of a flexible display 1030. According to an embodiment, the slide plate 1060 may include a bendable hinge rail coupled to an end thereof. For example, when the slide plate 1060 performs a sliding operation on the housing 1040, the hinge rail may be inserted into the inner space of the housing 1040 while supporting the flexible display 1030. According to an embodiment, the electronic device 1000 may include a housing structure 1010 which includes a front surface 1010a (e.g., a first surface) facing a first direction (e.g., the Z-axis direction), a rear surface 1010b (e.g., a second surface) facing a second direction (the -Z-axis direction) opposite to the first direction, and a side surface 1010c surrounding the space between the front surface 1010a and the rear surface 1010b and at least partially exposed to the outside. According to an embodiment, the rear surface 1010b may be formed through a rear cover 1021 coupled to the housing 1040. According to an embodiment, the rear cover 1021 may be formed of polymer, coated or colored glass, ceramic, metal (e.g., aluminum, stainless steel (STS), or magnesium), or a combination of at least two of the above materials. In an embodiment, the rear surface 1010b may be formed integrally with the housing 1040. According to an embodiment, at least a portion of the side surface 1010c may be disposed to be exposed to the outside through the housing 1040.

According to various embodiments, the housing 1040 may include a first side surface 1041 having a first length, a second side surface 1042 extending perpendicularly from the first side surface 1041 to have a second length longer than the first length, a third side surface 1043 which extends from the second side surface 1042, is substantially parallel to the first side surface 1041, and has substantially the first length, and a fourth side surface 1044 which extends from the third side surface 1043, is substantially parallel to the second side surface 1042, and has substantially a second length. According to an embodiment, the slide plate 1060 may support the flexible display 1030, and may be opened from the second side surface 1042 toward the fourth side surface 1044 (e.g., the X-axis direction), thereby enlarging the display area of the flexible display 1030, or may be closed from the fourth side surface 1044 toward the second side surface 1042 direction (e.g., the -X axis direction), thereby reducing the display area of the flexible display 1030. According to an embodiment, the electronic device 1000 may include a first lateral cover 1040a and a second lateral cover 1040b to cover the first side surface 1041 and the third side surface 1043. According to an embodiment, the slide plate 1060 may be disposed such that at least a portion of the slide plate 1060 is exposed or not exposed to the outside through the first lateral cover 1040a and the second lateral cover 1040b. For example, in the opened state, the slide plate 1060 may be moved from the second side surface 1042 toward the fourth side surface 1044 (e.g., the X-axis direction) to be at least partially exposed to the outside through the first lateral cover 1040a and the second lateral cover 1040b. For example, in the closed state, the slide plate 1060 may be moved from the fourth side surface 1044 toward the second side surface 1042 (e.g., -X axis direction), and thus may not be exposed to the outside through the first lateral cover 1040a and the second lateral cover 1040b. For example, the electronic device 1000 may include a rollable-type electronic device in which the area of a display screen of the flexible display 1030 is changed depending on the movement of the slide plate 1060 from the housing 1040.

According to various embodiments, the slide plate 1060 may be movably coupled in a sliding manner so as to be at least partially inserted into or withdrawn out of the housing 1040. According to an embodiment, the closed state may include an operation state in which the slide plate 1060 is at least partially inserted into the inner space of the housing 1040 so that the distance from the second side surface 1042 to the fourth side surface 1044 of the electronic device 1000 has a first width (w1). According to an embodiment, the opened state may include an operation state in which the slide plate 1060 is at least partially withdrawn out of the inner space of the housing 1040, so that the distance from the second side surface 1042 to the fourth side surface 1044 of the electronic device 1000 has a second width (w) greater than the first width (w1). For example, the electronic device 1000 may be configured to have, in the opened state, the second width (w) that includes a width (w2), which the hinge rail inserted in the housing 1040 moved out of the electronic device 1000, and is greater than the first width (w1).

According to various embodiments, the slide plate 1060 may be operated by a user's manipulation. In an embodiment, the slide plate 1060 may be automatically operated through a driving mechanism disposed in the inner space of the housing 1040. According to an embodiment, the electronic device 1000 may be configured to control the operation of the slide plate 1060 through the driving mechanism when an event for transition of the opened/closed state of the electronic device 1000 is detected through a processor (e.g., the processor 120 in FIG. 1). In an embodiment, in response to the display area of the flexible display 1030 changed according to an opened state, a closed state, or an intermediate state of the slide plate 1060, the processor (e.g., processor 120 in FIG. 1) of the electronic device 1000 may perform control to display an object in a variety of ways and to run an application.

According to various embodiments, the electronic device 1000 may include at least one of a sound input device 1003 (e.g., a microphone), sound output devices 1006 and 1007) (e.g., speakers), sensor modules 1004 and 1017, camera modules 1005 and 1016, a connector port 1008, a key input device (not shown), or an indicator (not shown). In another embodiment, in the electronic device 1000, at least one of the above-described elements may be omitted, or other elements may be additionally included.

According to various embodiments, the electronic device 1000 may include multiple antenna modules 1081, 1082, and/or 1083. According to an embodiment, the electronic device 1000 may include a first antenna module 1081 disposed in a first area (e.g., an upper area) of the inner space of the housing 1040, a second antenna module 1082 disposed on the fourth side surface 1044 of the interior space and/or a third antenna module 1083 disposed on the second side surface 1042 of the interior space. According to an embodiment, each of the antenna modules 1081, 1082, or 1083 may include an antenna array including multiple conductive patches, and at least one antenna for a second communication scheme.

According to various embodiments, the slide plate 1060 (e.g., the lateral frame) may be at least partially formed of a conductive material (e.g., a metal material). According to an embodiment, at least a portion of the slide plate 1060 corresponding to the third side surface 1043 and/or the fourth side surface 1044 may be formed of a conductive material, and may be divided into multiple conductive portions electrically insulated from each other through a non-conductive material. According to an embodiment, the multiple conductive parts are electrically connected to a wireless communication circuit (e.g., the wireless communication module 192 in FIG. 1) disposed in the electronic device 1000 so as to be used as antennas which operate in various frequency bands.

According to exemplary embodiments of the disclosure, a conductive material may be divided into multiple conductive portions through a predetermined process (e.g., insert injection molding or double injection molding) using a non-conductive material. For example, since the conductive portions may be formed as conductive portions which vary in shape and/or number by non-conductive portions formed of a non-conductive material so as to at least partially cross, and thus may operate as the antenna modules 1081, 1082 and/or 1083 corresponding to various frequency bands.

According to various embodiments, the electronic device 1000 may adaptively select, based on the state (e.g., an opened state or a closed state) of the electronic device 1000, the antenna modules 1081, 1082, and/or 1083 which is to be used to estimate the position of an external device. For example, when the electronic device 1000 is in an opened state, the electronic device 1000 may use antennas for the second communication scheme, which are included in the first antenna module 1081 disposed in the first area (e.g., the upper area) and the second antenna module 1082 disposed in the fourth side surface 1044, to estimate the position of an external device. For example, the electronic device 1000 may estimate the position (e.g., three-dimensional position) of an external device, based on a first angle of the external device, calculated based on the phase difference of antennas included in the first antenna module 1081 at a first time point, and a second angle of the external device, calculated based on the phase difference between antennas included in the second antenna module 1082 at a second time point. For example, when the electronic device 1000 is in a closed state, the electronic device 1000 may use the conductive portion of the slide plate 1060 and the antennas for the second communication scheme included in the second antenna module 1082 to estimate the position of an external device. For example, the electronic device 1000 may estimate the position (e.g., three-dimensional position) of an external device, based on a first angle of the external device, calculated based on the phase difference between the antennas included in the second antenna module 1082 at a first time point, and a second angle of the external device, calculated based on the phase difference between any one antenna included in the second antenna module 1082 and the conductive portion at a second time point.

For example, when the electronic device 1000 is in a closed state, the electronic device 1000 may use antennas for the second communication scheme, which are included in the first antenna module 1081 and the second antenna module 1082, to estimate the position of an external device. For example, when the electronic device 1000 is in the opened state, the electronic device 1000 may use antennas for the second communication scheme, which are included in the first antenna module 1081 and the third antenna module 1083.

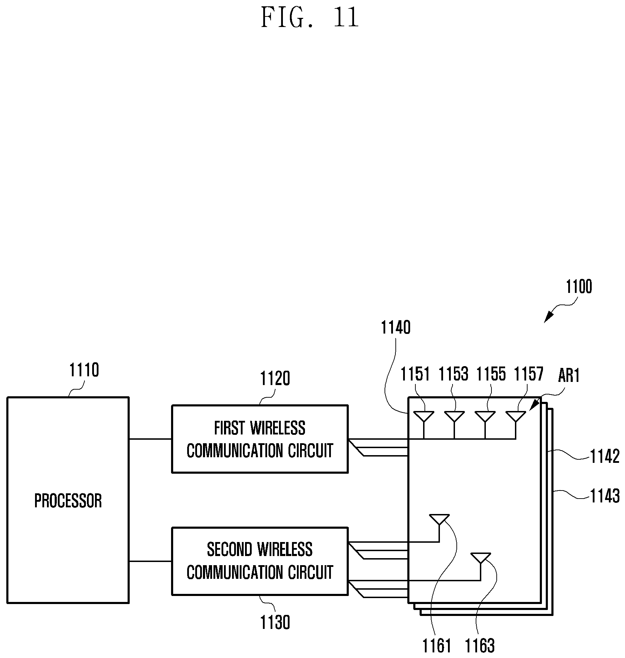

FIG. 11 is a block diagram of an electronic device 1100 for estimation of the position of an external device according to various embodiments of the disclosure. According to an embodiment, the electronic device 1100 in FIG. 11 may be at least partially similar to the electronic device 101 in FIG. 1 or 2, the electronic device 300 in FIG. 3A, the electronic device 900 in FIG. 9A, or the electronic device 1000 in FIG. 10A, or may further include other embodiments of the electronic device.

Referring to FIG. 11, according to various embodiments, the electronic device 1100 may include a processor 1110, a first wireless communication circuit 1120, a second wireless communication circuit 1130, and/or multiple antenna modules 1140, 1142, and/or 1143. According to an embodiment, the processor 1110 may be substantially the same as the processor 120 (e.g., the communication processor) in FIG. 1, or may be included in the processor 120. The first wireless communication circuit 1120 and/or the second wireless communication circuit 1130 may be substantially the same as the wireless communication module 192 in FIG. 1, or may be included in the wireless communication module 192. According to an embodiment, the processor 1110, the first wireless communication circuit 1120, and/or the second wireless communication circuit 1130 may be implemented in a single chip or a single package.

According to various embodiments, the processor 1110 may be electrically connected to the first wireless communication circuit 1120 and/or the second wireless communication circuit 1130. According to an embodiment, the processor 1110 may support wireless communication of a first communication scheme using the first wireless communication circuit 1120 and at least one antenna module 1140, 1142, and/or 1143. For example, at the time of transmission using the first communication scheme, the processor 1110 may generate a baseband signal to be transmitted to an external device (e.g., the electronic device 104 or the server 108 in FIG. 1). The processor 1110 may convert the baseband signal into a signal of an intermediate frequency band and transmit the signal of the intermediate frequency band to the first wireless communication circuit 1120. For example, at the time of reception using the first communication scheme, the processor 1110 may convert a signal of an intermediate frequency band, received from the first wireless communication circuit 1120, into a baseband signal and process the baseband signal.

According to an embodiment, the processor 1110 may estimate the position of an external device (e.g., the electronic device 104 or the server 108 in FIG. 1) by using a second communication scheme through the second wireless communication circuit 1130 and at least two antenna modules 1140, 1142, and/or 1143. For example, the processor 1110 may select, based on whether the multiple antenna modules 1140, 1142, and / or 1143 are used for wireless communication of the first communication scheme, at least two antenna modules 1140, 1142, and/or 1143 to be used for the second communication scheme. For example, when the wireless communication of the first communication scheme is performed through a first antenna module 1140, the processor 1110 may select a second antenna module 1142 and a third antenna module 1143 as antennas to be used for estimating the position of the external device. For example, the processor 1110 may select, based on the state (e.g., a folded state, an unfolded state, an opened state, or a closed state) of the electronic device 1100, at least two antenna modules 1140, 1142, and/or 1143 to be used for the second communication scheme. For example, the processor 1110 may select, based on the position of human body contact with the electronic device 1100, at least two antenna modules 1140, 1142, and/or 1143 to be used for the second communication scheme. For example, when it is determined that the human body is in contact with the rear surface (e.g., the rear plate 311 in FIG. 3A) of the electronic device, the processor 1110 may select at least two antenna modules 1140, 1142, and/or 1143, disposed on the side surface (e.g., the side surface 310C in FIG. 3A) of the electronic device 1100, as antennas to be used to estimate the position of the external device. For example, the position of the human body contact with the electronic device 1100 may be determined based on sensor data, obtained through a sensor module (e.g., the sensor module 176 in FIG. 1) included in the electronic device 1100, or the orientation of the electronic device 1100. For example, the processor 1110 may select, based on the orientation (e.g., landscape or portrait) of the electronic device 1100, at least two antenna modules 1140, 1142, and/or 1143 to be used for the second communication scheme.

According to an embodiment, the processor 1110 may transmit a signal related to position estimation through at least one antenna (e.g., the first antenna 1161 or the second antenna 1163) among the antennas for the second communication scheme that are included in the at least two antenna modules 1140, 1142, and/or 1143. For example, the processor 1110 may estimate a distance to an external device based on a delay time of a signal received from the external device in response to the signal related to the position estimation. For example, the processor 1110 may calculate a first angle of the external device based on the phase difference between signals received from the external device through the first antenna 1161 and the second antenna 1163 of the first antenna module 1140 in response to a signal related to position estimation and transmitted at a first time point. For example, the first angle of the external device may be recognized as a two-dimensional position of the external device. For example, the processor 1110 may calculate a second angle of the external device based on the phase difference between signals received from the external device through antennas (not shown) included in the second antenna module 1142 in response to a signal related to position estimation and transmitted at a second time point. The processor 1110 may estimate the three-dimensional position of the external device based on the first and second angles of the external device.

According to various embodiments, the first wireless communication circuit 1120 may transmit and receive signals to and from an external device through at least one network (e.g., 5G network). According to an embodiment, the first wireless communication circuit 1120 may include a radio frequency integrated circuit (RFIC) and a radio frequency front end (RFFE). For example, the RFIC may convert an intermediate frequency band (or baseband) signal provided from the processor 1110 (e.g., the communication processor) into a radio signal, or may convert a radio signal provided from the RFFE into an intermediate frequency band (or baseband) signal. For example, the RFFE may include processing for receiving or transmitting signals via the antenna module 1140, 1142, or 1143. For example, the RFFE may include an element for amplifying the power of a signal or an element for removing noise.

According to various embodiments, the second wireless communication circuit 1130 may support the second communication scheme.

According to an embodiment, the second wireless communication circuit 1130 may transmit and/or receive data to and/or from an external device through the second communication scheme. In an example, the second communication scheme may include an ultra-wideband (UWB) communication scheme. According to an embodiment, the second wireless communication circuit 1130 may start position measurement based on a signal related to the start of position estimation and received from the processor 1110. For example, the second wireless communication circuit 1130 may establish a channel for communication with an external device (e.g., the electronic device 102 in FIG. 1), based on the signal related to the start of position estimation. The second wireless communication circuit 1130 may transmit and/or receive data related to estimation the position of the external device through the channel for communication the external device. For example, the position of the external device may include information related to the distance between the electronic device 1100 and the external device and/or the position of the external device relative to the electronic device 1100.

According to various embodiments, the multiple antenna modules 1140, 1142, or 1143 may include an array antenna and at least one antenna supporting the second communication scheme. According to an embodiment, the first antenna module 1140 may include an array antenna AR1 including multiple conductive patches 1151, 1153, 1155, and/or 1157, and multiple antennas 1161 and/or 1163 for supporting the second communication scheme. According to an embodiment, the multiple antenna modules 1140, 1142, or 1143 may be disposed in different areas in the inner space of the electronic device 1100. For example, the first antenna module 1140 may be disposed close to a fourth side surface (e.g., the fourth side surface 710d in FIG. 7A) of a lateral member of the electronic device 1100. For example, the second antenna module 1142 may be disposed close to a first side surface (e.g., the first side surface 710a in FIG. 7A) of the lateral member of the electronic device 1100. For example, the third antenna module 1143 may be disposed close to a third side surface (e.g., the third side surface 710c in FIG. 7A) of the lateral member of the electronic device 1100. For example, the first antenna module 1140 may be spaced less than 2 cm apart from the fourth side surface (e.g., the fourth side surface 710d in FIG. 7A) of the lateral member of the electronic device 1100. For example, the second antenna module 1142 may be spaced less than 2 cm apart from the first side surface (e.g., the first side surface 710a in FIG. 7A) of the lateral member of the electronic device 1100. For example, the third antenna module 1143 may be spaced less than 2 cm apart from the third side surface (e.g., the third side surface 710c in FIG. 7A) of the lateral member of the electronic device 1100.

According to various embodiments of the disclosure, an electronic device (e.g., the electronic device 101 in FIG. 1 or 2, the electronic device 300 in FIG. 3A, the electronic device 900 in FIG. 9A, the electronic device 1000 in FIG. 10A, or the electronic device 1100 in FIG. 11) may include: a housing (e.g., the housing 310 in FIG. 3A, the first housing 910 or the second housing 920 in FIG. 9A, or the housing 1040 in FIG. 10A); a first antenna module (e.g., the third antenna module 246 in FIG. 2 or 4A, the antenna module 500 in FIG. 5A, 5B, or 5C, the antenna module 600 in FIG. 6, the first antenna module 730 in FIG. 7A or 7B, the first antenna module 981 in FIG. 9C, the first antenna module 1081 in FIG. 10C, or the first antenna module 1140 in FIG. 11) disposed in a first area of an inner space of the housing, the first antenna module including a first substrate (e.g., the printed circuit board 410 in 4A, the printed circuit board 590 in FIG. 5A, 5B, or 5C, the first sub board 620 in FIG. 6, or the printed circuit board 890 in FIG. 8) disposed in the inner space, a first array antenna (e.g., the antenna 248 in FIG. 2, the antenna array 430 in 4A, the array antenna AR1 in FIG. 5A, 5B, or 5C, the first array antenna 630 in FIG. 6, the array antenna AR1 in FIG. 8, or the array antenna AR1 in FIG. 11) disposed on the first substrate and supporting a first communication scheme, and at least two first antennas (e.g., the first antenna 551 or the second antenna 553 in FIG. 5A, the third antenna 561 or the fourth antenna 563 in FIG. 5B, the fifth antenna 571 or the sixth antenna 573 in FIG. 5C, the seventh antenna 641 or the eighth antenna 643 in FIG. 6, the first antenna 851 or the second antenna 853 in FIG. 8, or the first antenna 1161 or the second antenna 1163 in FIG. 11) disposed on the first substrate and supporting a second communication scheme; a second antenna module (e.g., the third antenna module 246 in FIG. 2 or 4A, the antenna module 500 in FIG. 5A, 5B, or 5C, the antenna module 600 in FIG. 6, the second antenna module 750 in FIG. 7A, the conductive portion 760 in FIG. 7B, the second antenna module 982 in FIG. 9C, the second antenna module 1082 in FIG. 10C, or the second antenna module 1142 in FIG. 11) disposed in a second area different from the first area of the inner space, the second antenna module including a second substrate (e.g., the printed circuit board 410 in 4A, the printed circuit board 590 in FIG. 5A, 5B, or 5C, or the second sub board 670 in FIG. 6) disposed in the inner space, a second array antenna (e.g., the antenna 248 in FIG. 2, the antenna array 430 in 4A, the array antenna AR1 in FIG. 5A, 5B, or 5C, or the second array antenna 650 in FIG. 6) disposed on the second substrate and supporting the first communication scheme, and at least one second antenna (e.g., the first antenna 551 or the second antenna 553 in FIG. 5A, the third antenna 561 or the fourth antenna 563 in FIG. 5B, the fifth antenna 571 or the sixth antenna 573 in FIG. 5C, or the ninth antenna 661 or the tenth antenna 663 in FIG. 6) disposed on the second substrate and supporting the second communication scheme; a first wireless communication circuit (e.g., the wireless communication module 192 in FIG. 1, the RFIC 226 in FIG. 2, the RFIC 452 in 4A, the wireless communication circuit 595 in FIG. 5A, 5B, or 5C, or the first wireless communication circuit 1120 in FIG. 11) disposed in the inner space and configured to transmit and/or receive a wireless signal of the first communication scheme through the first array antenna and/or the second array antenna; a second wireless communication circuit (e.g., the wireless communication module 192 in FIG. 1, the RFIC 226 in FIG. 2, the RFIC 452 in 4A, the wireless communication circuit 595 in FIG. 5A, 5B or 5C, or the second wireless communication circuit 1130 in FIG. 11) disposed in the inner space and configured to transmit and/or receive a wireless signal of the second communication scheme through the first antennas and/or the second antenna; and a processor (e.g., the processor 120 in FIG. 1 or 2, or the processor 1110 in FIG. 11) electrically connected to the first wireless communication circuit and the second wireless communication circuit, wherein the processor is configured to estimate a position of an external device, based on a first signal received through the first antennas at a first time point and a second signal received through the second antenna and any one of the first antennas at a second time point different from the first time point.

According to various embodiments, the first substrate may include a first surface (e.g., the first surface 491 in 4A, the first surface 591 in FIG. 5A, 5B or 5C, or the first surface 891 in FIG. 8), and a second surface (e.g., the second surface 492 in 4A or the second surface 592 in FIG. 5A, 5B or 5C) facing a direction opposite to that of the first surface, and the first array antenna and the first antennas may be disposed in different areas on the first surface.

According to various embodiments, the second substrate may include a third surface (e.g., the first surface 491 in 4A, the first surface 591 in FIG. 5A, 5B or 5C, or the first surface 891 in FIG. 8), and a fourth surface (e.g., the second surface 492 in 4A or the second surface 592 in FIG. 5A, 5B or 5C) facing a direction opposite to that of the third surface, and the second array antenna and the second antenna may be disposed in different areas on the third surface.

According to various embodiments, the first substrate may include a first surface and a second surface facing a direction opposite to that of the first surface, the first array antenna may be disposed on the first surface, and the first antennas may be disposed inside the first substrate.

According to various embodiments, the second substrate may include a third surface and a fourth surface facing a direction opposite to that of the third surface, the second array antenna may be disposed on the third surface, and the second antenna may be disposed inside the second substrate.

According to various embodiments, the housing may include a first plate (e.g., the front plate 302 in FIG. 3A) facing a first direction, a second plate (e.g., the rear plate 311 in FIG. 3B) facing a second direction opposite to the direction faced by the first plate, and a lateral member (e.g., the lateral member 318 in FIG. 3A or 3B) surrounding the inner space between the first plate and the second plate, the lateral member may include a first side surface having a first length, a second side surface facing a direction opposite to that of the first side surface, a third side surface perpendicular to the first side surface and having a second length relatively longer than the first length, and a fourth side surface facing a direction opposite to that of the third side surface, the first antenna module may be disposed in a position close to the first side surface in the inner space such that the longitudinal direction of the first side surface is parallel to the arrangement direction of the first array antenna, and the second antenna module may be disposed in a position close to the third side surface in the inner space such that the longitudinal direction of the third side surface is parallel to the arrangement direction of the second array antenna.

According to various embodiments, the first antennas configured to receive the first signal may be disposed on a first imaginary axis, and the second antenna and any one of the first antennas, configured to receive the second signal, may be disposed on a second imaginary axis different from the first axis.

According to various embodiments, the first communication scheme may include new radio (NR) communication, and the second communication scheme may include ultra-wideband (UWB) communication.

According to various embodiments of the disclosure, an electronic device (e.g., the electronic device 101 in FIG. 1 or 2, the electronic device 300 in FIG. 3A, the electronic device 900 in FIG. 9A, the electronic device 1000 in FIG. 10A, or the electronic device 1100 in FIG. 11) may include: a housing (e.g., the housing 310 in FIG. 3A, the first housing 910 or the second housing 920 in FIG. 9A, or the housing 1040 in FIG. 10A); a first antenna module (e.g., the third antenna module 246 in FIG. 2 or 4A, the antenna module 500 in FIG. 5A, 5B, or 5C, the antenna module 600 in FIG. 6, the first antenna module 730 in FIG. 7A or 7B, the first antenna module 981 in FIG. 9C, the first antenna module 1081 in FIG. 10C, or the first antenna module 1140 in FIG. 11) disposed in a first area of an inner space of the housing, the first antenna module including a first substrate (e.g., the printed circuit board 410 in 4A, the printed circuit board 590 in FIG. 5A, 5B, or 5C, the first sub board 620 in FIG. 6, or the printed circuit board 890 in FIG. 8) disposed in the inner space, a first array antenna (e.g., the antenna 248 in FIG. 2, the antenna array 430 in 4A, the array antenna AR1 in FIG. 5A, 5B, or 5C, the first array antenna 630 in FIG. 6, the array antenna AR1 in FIG. 8, or the array antenna AR1 in FIG. 11) disposed on the first substrate and supporting a first communication scheme, and at least two first antennas (e.g., the first antenna 551 or the second antenna 553 in FIG. 5A, the third antenna 561 or the fourth antenna 563 in FIG. 5B, the fifth antenna 571 or the sixth antenna 573 in FIG. 5C, the seventh antenna 641 or the eighth antenna 643 in FIG. 6, the first antenna 851 or the second antenna 853 in FIG. 8, or the first antenna 1161 or the second antenna 1163 in FIG. 11) disposed on the first substrate and supporting a second communication scheme; a second antenna module (e.g., the third antenna module 246 in FIG. 2 or 4A, the antenna module 500 in FIG. 5A, 5B, or 5C, the antenna module 600 in FIG. 6, the second antenna module 750 in FIG. 7A, the conductive portion 760 in FIG. 7B, the second antenna module 982 in FIG. 9C, the second antenna module 1082 in FIG. 10C, or the second antenna module 1142 in FIG. 11) disposed in a second area different from the first area of the inner space, the second antenna module including a second substrate (e.g., the printed circuit board 410 in 4A, the printed circuit board 590 in FIG. 5A, 5B, or 5C, or the second sub board 670 in FIG. 6) disposed in the inner space, a second array antenna (e.g., the antenna 248 in FIG. 2, the antenna array 430 in 4A, the array antenna AR1 in FIG. 5A, 5B, or 5C, or the second array antenna 650 in FIG. 6) disposed on the second substrate and supporting the first communication scheme, and at least two second antennas (e.g., the first antenna 551 or the second antenna 553 in FIG. 5A, the third antenna 561 or the fourth antenna 563 in FIG. 5B, the fifth antenna 571 or the sixth antenna 573 in FIG. 5C, or the ninth antenna 661 or the tenth antenna 663 in FIG. 6) disposed on the second substrate and supporting the second communication scheme; a first wireless communication circuit (e.g., the wireless communication module 192 in FIG. 1, the RFIC 226 in FIG. 2, the RFIC 452 in 4A the wireless communication circuit 595 in FIG. 5A, 5B, or 5C, or the first wireless communication circuit 1120 in FIG. 11) disposed in the inner space and configured to transmit and/or receive a wireless signal of the first communication scheme through the first array antenna and/or the second array antenna; a second wireless communication circuit (e.g., the wireless communication module 192 in FIG. 1, the RFIC 226 in FIG. 2, the RFIC 452 in 4A, the wireless communication circuit 595 in FIG. 5A, 5B or 5C, or the second wireless communication circuit 1130 in FIG. 11) disposed in the inner space and configured to transmit and/or receive a wireless signal of the second communication scheme through the first antennas and/or the second antennas; and a processor (e.g., the processor 120 in FIG. 1 or 2, or the processor 1110 in FIG. 11) electrically connected to the first wireless communication circuit and the second wireless communication circuit, wherein the processor is configured to estimate a position of an external device, based on a first signal received through the first antennas at a first time point and a second signal received through the second antennas at a second time point different from the first time point.

According to various embodiments, the first substrate may include a first surface (e.g., the first surface 491 in 4A, the first surface 591 in FIG. 5A, 5B or 5C, or the first surface 891 in FIG. 8), and a second surface (e.g., the second surface 492 in 4A or the second surface 592 in FIG. 5A, 5B or 5C) facing a direction opposite to that of the first surface, and the first array antenna and the first antennas may be disposed in different areas on the first surface.

According to various embodiments, the second substrate may include a third surface (e.g., the first surface 491 in 4A, the first surface 591 in FIG. 5A, 5B or 5C, or the first surface 891 in FIG. 8), and a fourth surface (e.g., the second surface 492 in 4A or the second surface 592 in FIG. 5A, 5B or 5C) facing a direction opposite to that of the third surface, and the second array antenna and the second antennas may be disposed in different areas on the third surface.

According to various embodiments, the first substrate may include a first surface and a second surface facing a direction opposite to that of the first surface, the first array antenna may be disposed on the first surface, and the first antennas may be disposed inside the first substrate.

According to various embodiments, the second substrate may include a third surface and a fourth surface facing a direction opposite to that of the third surface, the second array antenna may be disposed on the third surface, and the second antennas may be disposed inside the second substrate.

According to various embodiments, the housing may include a first plate (e.g., the front plate 302 in FIG. 3A) facing a first direction, a second plate (e.g., the rear plate 311 in FIG. 3B) facing a second direction opposite to the direction faced by the first plate, and a lateral member (e.g., the lateral member 318 in FIG. 3A or 3B) surrounding the inner space between the first plate and the second plate, the lateral member may include a first side surface having a first length, a second side surface facing a direction opposite to that of the first side surface, a third side surface perpendicular to the first side surface and having a second length relatively longer than the first length, and a fourth side surface facing a direction opposite to that of the third side surface, the first antenna module may be disposed in a position close to the first side surface in the inner space such that the longitudinal direction of the first side surface is parallel to the arrangement direction of the first array antenna, and the second antenna module may be disposed in a position close to the third side surface in the inner space such that the longitudinal direction of the third side surface is parallel to the arrangement direction of the second array antenna.

According to various embodiments, the first antennas may be disposed on a first imaginary axis, and the second antennas may be disposed on a second imaginary axis different from the first axis.

According to various embodiments, the first communication scheme may include new radio (NR) communication, and the second communication scheme may include ultra-wideband (UWB) communication.

According to various embodiments of the disclosure, an electronic device (e.g., the electronic device 101 in FIG. 1 or 2, the electronic device 300 in FIG. 3A, the electronic device 900 in FIG. 9A, the electronic device 1000 in FIG. 10A, or the electronic device 1100 in FIG. 11) may include: a housing (e.g., the housing 310 in FIG. 3A, the first housing 910 or the second housing 920 in FIG. 9A, or the housing 1040 in FIG. 10A) at least partially including a conductive portion; an antenna module (e.g., the third antenna module 246 in FIG. 2 or 4A, the antenna module 500 in FIG. 5A, 5B, or 5C, the antenna module 600 in FIG. 6, the first antenna module 730 in FIG. 7A or 7B, the first antenna module 981 in FIG. 9C, the first antenna module 1081 in FIG. 10C, or the first antenna module 1140 in FIG. 11) disposed in an inner space of the housing, the antenna module including a substrate (e.g., the printed circuit board 410 in 4A, the printed circuit board 590 in FIG. 5A, 5B, or 5C, the first sub board 620 in FIG. 6, or the printed circuit board 890 in FIG. 8) disposed in the inner space, an array antenna (e.g., the antenna 248 in FIG. 2, the antenna array 430 in 4A, the array antenna AR1 in FIG. 5A, 5B, or 5C, the first array antenna 630 in FIG. 6, the array antenna AR1 in FIG. 8, or the array antenna AR1 in FIG. 11) disposed on the substrate and supporting a first communication scheme, and at least two antennas (e.g., the first antenna 551 or the second antenna 553 in FIG. 5A, the third antenna 561 or the fourth antenna 563 in FIG. 5B, the fifth antenna 571 or the sixth antenna 573 in FIG. 5C, the seventh antenna 641 or the eighth antenna 643 in FIG. 6, the first antenna 851 or the second antenna 853 in FIG. 8, or the first antenna 1161 or the second antenna 1163 in FIG. 11) disposed on the substrate and supporting a second communication scheme; a first wireless communication circuit (e.g., the wireless communication module 192 in FIG. 1, the RFIC 226 in FIG. 2, the RFIC 452 in 4A, the wireless communication circuit 595 in FIG. 5A, 5B, or 5C, or the first wireless communication circuit 1120 in FIG. 11) disposed in the inner space and configured to transmit and/or receive a wireless signal of the first communication scheme through the array antenna; a second wireless communication circuit (e.g., the wireless communication module 192 in FIG. 1, the RFIC 226 in FIG. 2, the RFIC 452 in 4A, the wireless communication circuit 595 in FIG. 5A, 5B or 5C, or the second wireless communication circuit 1130 in FIG. 11) disposed in the inner space and configured to transmit and/or receive a wireless signal of the second communication scheme through the at least two antennas; and a processor (e.g., the processor 120 in FIG. 1 or 2, or the processor 1110 in FIG. 11) electrically connected to the first wireless communication circuit and the second wireless communication circuit, wherein the processor is configured to estimate a position of an external device, based on a first signal received through the at least two antennas at a first time point and a second signal received through any one of the at least two antennas and the conductive portion at a second time point different from the first time point.

According to various embodiments, the substrate may include a first surface (e.g., the first surface 491 in 4A, the first surface 591 in FIG. 5A, 5B or 5C, or the first surface 891 in FIG. 8), and a second surface (e.g., the second surface 492 in 4A or the second surface 592 in FIG. 5A, 5B or 5C) facing a direction opposite to that of the first surface, the array antenna may be disposed in a first area of the first surface, and the at least two antennas may be disposed in a second area different from the first area on the first surface.

According to various embodiments, the substrate may include a first surface and a second surface facing a direction opposite to that of the first surface, the array antenna may be disposed on the first surface, and the at least two antennas may be disposed inside the substrate.

According to various embodiments, the at least two antennas configured to receive the first signal may be disposed on a first imaginary axis, and any one antenna of the at least two antennas and the conductive portion configured to receive the second signal may be disposed on a second imaginary axis different from the first axis.

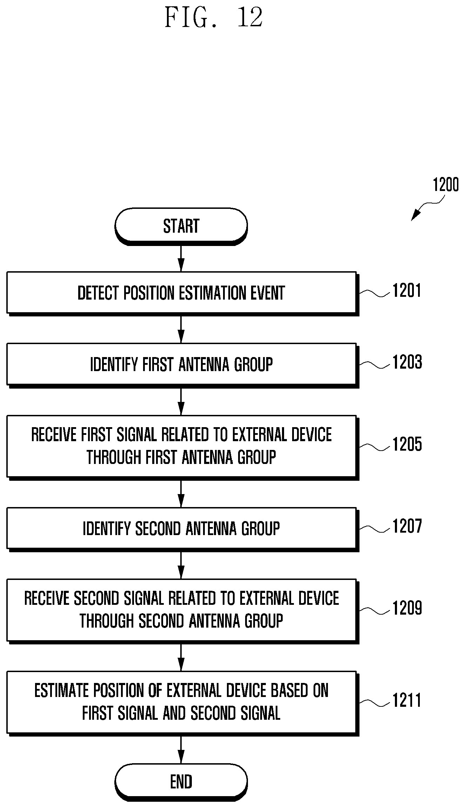

FIG. 12 is a flowchart 1200 for estimating the position of an external device in an electronic device according to various embodiments of the disclosure. Operations in the following embodiments may be performed sequentially, but are not necessarily performed sequentially. For example, the order of operations may be changed, or at least two operations may be performed in parallel. For example, the electronic device in FIG. 12 may be the electronic device 101 in FIG. 1 or 2, the electronic device 300 in FIG. 3A, the electronic device 900 in FIG. 9A, the electronic device 1000 in FIG. 10A, or the electronic device 1100 in FIG. 11.

Referring to FIG. 12, according to various embodiments, an electronic device (e.g., the processor 120 in FIG. 1 and/or the processor 1110 in FIG. 11) may detect, in operation 1201, the occurrence of an event for estimating the position of an external device (e.g., the electronic device 104 or the server 108 in FIG. 1). According to an embodiment, when an application program related to estimation of the position of an external device is executed, the processor 1110 may determine that an event for the position estimation has occurred. According to an embodiment, when a distance to an external device measured through a separate communication circuit (e.g., Bluetooth or Bluetooth low energy (BLE)) is within a designated distance, the processor 1110 may determine that an event for position estimation has occurred. According to an embodiment, when a distance measurement request is received from an external device (e.g., the electronic device 104 or the server 108 in FIG. 1), the processor 1110 may determine that an event for position estimation has occurred. For example, the distance measurement request may be received through a separate communication circuit (e.g., Bluetooth or BLE).

According to various embodiments, in operation 1203, the electronic device (e.g., the processor 120 or 1110) may identify a first antenna group including at least two antennas, which are to be used to estimate the position of an external device, among multiple antennas that support a second communication scheme and are included in multiple antenna modules (e.g., the antenna modules 1140, 1142, and/or 1143 in FIG. 11). According to an embodiment, the processor 1110 may identify at least one antenna module, among the multiple antenna modules 1140, 1142, and/or 1143, which performs data transmission and/or reception based on a first communication scheme. The processor 1110 may select an antenna module (e.g., the first antenna module 1140) which is not used for wireless communication based on the first communication scheme. For example, the first antenna group may include the first antenna 1161 and the second antenna 1163 arranged on a first imaginary axis and included in the antenna module (e.g., the first antenna module 1140) which is not used for wireless communication based on the first communication scheme.

According to an embodiment, the processor 1110 may identify, based on the state (e.g., a folded state, unfolded state, opened state, or closed state) of the electronic device 1100, at least one antenna module 1140, 1142, or 1143 to be used for the second communication scheme. For example, the first antenna group may include at least two antennas disposed on a first imaginary axis, among antennas supporting the second communication scheme and included in the at least one antenna module 1140, 1142, or 1143 identified based on the state of the electronic device 1100.

According to an embodiment, the processor 1110 may identify, based on the position of human body contact with the electronic device 1100, at least one antenna module 1140, 1142, or 1143 to be used for the second communication scheme. For example, the first antenna group may include at least two antennas disposed on a first imaginary axis, among antennas supporting the second communication scheme and included in the at least one antenna module 1140, 1142, or 1143 identified based on the position of human body contact with the electronic device 1100. For example, the position of the human body contact with the electronic device 1100 may be determined based on sensor data, obtained through a sensor module (e.g., the sensor module 176 in FIG. 1) included in the electronic device 1100, or the orientation of the electronic device 1100.

According to an embodiment, the processor 1110 may identify, based on the orientation (e.g., landscape or portrait) of the electronic device 1100, at least one antenna module 1140, 1142, or 1143 to be used for the second communication scheme. For example, the first antenna group may include at least two antennas disposed on a first imaginary axis, among antennas supporting the second communication scheme and included in the at least one antenna module 1140, 1142, or 1143 identified based on the orientation of the electronic device 1100.

According to various embodiments, in operation 1205, the electronic device (e.g., the processor 120 or 1110) may receive a first signal related to an external device through at least two antennas included in the first antenna group. According to an embodiment, the processor 1110 may transmit a signal related to position estimation to the external device through one of the at least two antennas included in the first antenna group. The processor 1110 may receive signals related to position estimation from the external device through the at least two antennas included in the first antenna group. For example, the processor 11110 may calculate the angle of the external device based on the phase difference between signals received through the at least two antennas included in the first antenna group. For example, the angle of the external device may include information related to a direction in which the external device is positioned based on the position of the electronic device 1100.

According to various embodiments, in operation 1207, the electronic device (e.g., the processor 120 or 1110) may identify a second antenna group including at least two antennas, which are to be used to estimate the position of an external device, among the multiple antennas supporting the second communication scheme and included in the multiple antenna modules (e.g., the antenna modules 1140, 1142, and/or 1143 in FIG. 11). According to an embodiment, the processor 1110 may identify at least one antenna module 1140, 1142, or 1143 to be used for the second communication scheme, based on whether wireless communication based on the first communication scheme is used, the state (e.g., a folded state, an unfolded state, an opened state, or a closed state) of the electronic device 1100, or a human body contact position. For example, the second antenna group may include at least two antennas, which are disposed on a second imaginary axis different from the first imaginary axis, among antennas supporting the second communication scheme and included in at least one antenna module 1140, 1142, or 1143.

According to various embodiments, in operation 1209, the electronic device (e.g., the processor 120 or 1110) may receive a second signal related to the external device through the at least two antennas included in the second antenna group. According to an embodiment, the processor 1110 may transmit a signal related to position estimation to the external device through one of the at least two antennas included in the second antenna group. The processor 1110 may receive signals related to position estimation from the external device through the at least two antennas included in the second antenna group. For example, the processor 1110 may calculate the angle of the external device based on the phase difference of signals received through the at least two antennas included in the second antenna group.

According to various embodiments, in operation 1211, the electronic device (e.g., the processor 120 or 1110) may estimate the position of the external device, based on the phase difference of the first signal received through the first antenna group and the phase difference of the second signal received through the second antenna group. According to an embodiment, the processor 1110 may estimate a three-dimensional position of the external device, based on a first angle of the external device calculated through the first antenna group and a second angle of the external device calculated through the second antenna group.

According to various embodiments, the first antenna group may include the first antenna 851 and the second antenna 853, which are included in the first antenna module 730 in FIG. 7A, or the third antenna 755 and the fourth antenna 757, which are included in the second antenna module 750 in FIG. 7A. According to one embodiment, the second antenna group may include the first antenna 851 (or the second antenna 853) included in the first antenna module 730 in FIG. 7A and the third antenna 755 (or the fourth antenna 757) included in the second antenna module 750.

According to various embodiments, the first antenna group may include the first antenna 851 and the second antenna 853 which are included in the first antenna module 730 in FIG. 7A. According to an embodiment, the second antenna group may include the third antenna 755 and the fourth antenna 757 which are included in the second antenna module 750.

According to various embodiments, the first antenna group may include the first antenna 851 and the second antenna 853 which are included in the first antenna module 730 in FIG. 7B. According to an embodiment, the second antenna group may include the first antenna 851 (or the second antenna 853) included in the first antenna module 730 in FIG. 7A and the conductive portion 760 of the lateral member 710.

According to various embodiments of the disclosure, the electronic device (e.g., the processor 120 or 1110) may identify the first antenna group and the second antenna group when an event for position estimation is detected. The electronic device (e.g., the processor 120 or 1110) may estimate the position of the external device based on a first signal received through the at least two antennas included in the first antenna group at a first time point and a second signal received through the at least two antennas included in the second antenna group at a second time point.

Various embodiments disclosed in the specification and the drawings are merely particular examples provided to easily describe the technical matters according to the embodiments of the disclosure and contribute to understanding embodiments of the disclosure, and do not limit the scope of embodiments of the disclosure. Therefore, it should be construed that all modifications or modified forms capable of being derived from the technical idea of various embodiments of the disclosure in addition to the embodiments disclosed herein are included in the scope of the disclosure.

## Claims

1. An electronic device (102, 900, 1000, 1100) comprising:
a housing (310, 1040);
a first antenna module (242, 730, 981, 1081, 1140) disposed in a first area of an inner space (701) of the housing (310, 1040), the first antenna module (242, 730, 981, 1081, 1140) comprising a first substrate (590, 620) disposed in the inner space (701), a first array antenna (630) disposed on the first substrate and supporting a first communication scheme, and a plurality of first antennas (551, 553, 641, 643) disposed on a surface of the first substrate (590, 620) facing a first direction and supporting a second different communication scheme;
a second antenna module (244, 750, 982, 1082, 1142) disposed in a second area different from the first area of the inner space (701), the second antenna module (244, 750, 982, 1082, 1142) comprising a second substrate (670) different from the first substrate and disposed in the inner space (701), a second array antenna (650, 751) disposed on the second substrate (670) and supporting the first communication scheme, and a plurality of second antennas (757, 1163) disposed on a surface of the second substrate (670) facing a second direction different from the first direction and supporting the second communication scheme;
a first wireless communication circuit (1120) disposed in the inner space (701) and configured to transmit and/or receive a wireless signal of the first communication scheme through the first array antenna (630) and/or the second array antenna (650, 751);
a second wireless communication circuit (1130) disposed in the inner space (701) and configured to transmit and/or receive a wireless signal of the second communication scheme through the first antennas (551, 553, 641, 643) and/or the second antennas (757, 1163); and
a processor (120, 1110) electrically connected to the first wireless communication circuit (1120) and the second wireless communication circuit (1130),
wherein the processor (120, 1110) is configured to estimate a position of an external device (102, 104) based on
a first signal received through the plurality of first antennas (551, 553, 641, 643) or the plurality of second antennas (757, 1163), and
a second signal received through one from the plurality of first antennas (551, 553, 641, 643) and one from the plurality of second antennas (757, 1163).

2. The electronic device (102, 900, 1000, 1100) of claim 1, wherein the first substrate (590, 620) comprises a first surface (310a, 491, 591, 611, 891, 911) and a second surface (310b, 492, 592, 612) facing a direction opposite to that of the first surface (310a, 491, 591, 611, 891, 911), and
wherein the first array antenna (630) and the first antennas (551, 553, 641, 643) are disposed in different areas on the first surface (310a, 491, 591, 611, 891, 911).

3. The electronic device (102, 900, 1000, 1100) of claim 1, wherein the second substrate (670) comprises a third surface (921) and a fourth surface (922) facing a direction opposite to that of the third surface (921), and
wherein the second array antenna (650, 751) and the plurality of second antennas (757, 1163) are disposed in different areas on the third surface (921).

4. The electronic device (102, 900, 1000, 1100) of claim 1, wherein the first substrate (590, 620) comprises a first surface (310a, 491, 591, 611, 891, 911) and a second surface (310b, 492, 592, 612) facing a direction opposite to that of the first surface (310a, 491, 591, 611, 891, 911),
wherein the first array antenna (630) is disposed on the first surface (310a, 491, 591, 611, 891, 911), and
wherein the first antennas (551, 553, 641, 643) are disposed inside the first substrate.

5. The electronic device (102, 900, 1000, 1100) of claim 1, wherein the second substrate (670) comprises a third surface (921) and a fourth surface (922) facing a direction opposite to that of the third surface (921),
wherein the second array antenna (650, 751) is disposed on the third surface (921), and
wherein the plurality of second antennas (757, 1163) are disposed inside the second substrate.

6. The electronic device (102, 900, 1000, 1100) of claim 1, wherein the housing (310, 1040) comprises a first plate facing a first direction, a second plate facing a second direction opposite to the direction faced by the first plate, and a lateral member (710) surrounding the inner space (701) between the first plate and the second plate,
wherein the lateral member (710) comprises a first side surface (710a, 913c, 1041) having a first length, a second side surface (710b, 913b, 1042) facing a direction opposite to that of the first side surface (710a, 913c, 1041), a third side surface (710c, 1043) perpendicular to the first side surface (710a, 913c, 1041) and having a second length relatively longer than the first length, and a fourth side surface (710d, 1044) facing a direction opposite to that of the third side surface (710c, 1043),
wherein the first antenna module (242, 730, 981, 1081, 1140) is disposed in a position close to the first side surface (710a, 913c, 1041) in the inner space (701) such that a longitudinal direction of the first side surface (710a, 913c, 1041) is parallel to an arrangement direction of the first array antenna (630), and
wherein the second antenna module (244, 750, 982, 1082, 1142) is disposed in a position close to the third side surface (710c, 1043) in the inner space (701) such that a longitudinal direction of the third side surface (710c, 1043) is parallel to an arrangement direction of the second array antenna (650, 751).

7. The electronic device (102, 900, 1000, 1100) of claim 1, wherein the processor (120, 1110) is configured to estimate the position of the external device (102, 104), based on a first phase difference of signals received through the plurality of first antennas (551, 553, 641, 643) or through the plurality of second antennas (757, 1163) at a first time point and a second phase difference of signals received through one of the plurality of second antennas (757, 1163) and one of the plurality of first antennas (551, 553, 641, 643) at a second time point different from the first time point.

8. The electronic device (102, 900, 1000, 1100) of claim 7, further comprising:
a third antenna module (248, 983, 1083, 1143) disposed in a second area different from the first area of the inner space (701), the third antenna module (248, 983, 1083, 1143) comprising a third substrate different from the first substrate (590, 620) and the second substrate (670) and disposed in the inner space (701), a third array antenna disposed on the third substrate and supporting the first communication scheme, and at least one third antenna disposed on the third substrate facing a third direction different from the first direction and the second direction and supporting the second communication scheme,
wherein the processor is configured to:
select the first antenna module (242, 730, 981, 1081, 1140) and the second antenna module (244, 750, 982, 1082, 1142) among the first antenna module (242, 730, 981, 1081, 1140), the second antenna module (244, 750, 982, 1082, 1142) and the third antenna module (248, 983, 1083, 1143) based on information related to the third antenna module for transmitting and/or receiving data using the first communication scheme, and
estimate the position of the external device (102, 104), based on the first phase difference of signals received through the plurality of first antennas (551, 553, 641, 643) or through the plurality of second antennas (757, 1163) at the first time point and the second phase difference of signals received through one of the plurality of second antennas (757, 1163) and one of the plurality of first antennas (551, 553, 641, 643) at the second time point.

9. The electronic device (102, 900, 1000, 1100) of claim 7, wherein the plurality of first antennas (551, 553, 641, 643) configured to receive the signals are disposed on a first imaginary axis, and
wherein one of the plurality of second antennas (757, 1163) and one of the plurality of first antennas (551, 553, 641, 643), configured to receive the signals are disposed on a second imaginary axis different from the first axis.

10. The electronic device (102, 900, 1000, 1100) of claim 1, wherein the first communication scheme comprises new radio, NR, communication, and
wherein the second communication scheme comprises ultra-wideband (UWB) communication.

11. The electronic device (102, 900, 1000, 1100) of claim 1, wherein the housing (310, 1040) at least partially comprises a conductive portion (760, 916).

12. The electronic device (102, 900, 1000, 1100) of claim 11, wherein the plurality of first antennas (551, 553, 641, 643) are disposed on a first imaginary axis, and
wherein one antenna among the plurality of first antennas (551, 553, 641, 643) and the conductive portion (760, 916) are disposed on a second imaginary axis different from the first axis.

13. The electronic device (102, 900, 1000, 1100) of claim 12, wherein the processor (120, 1110) is configured to estimate a position of an external device (102, 104), based on a third phase difference of signals received through the plurality of first antennas (551, 553, 641, 643) at a third time point and a fourth phase difference of signals received through one antenna among the plurality of first antennas (551, 553, 641, 643) and the conductive portion (760, 916) at a fourth time point different from the third time point.

14. The electronic device (102, 900, 1000, 1100) of claim 1, wherein the first antennas (551, 553, 641, 643) and/or the second antennas (757, 1163) comprises a dipole antenna (248, 327), a folded dipole antenna (248, 327), a loop antenna (248, 327), or a folded loop antenna (248, 327).

## Patentansprüche

1. Elektronische Vorrichtung (102, 900, 1000, 1100), die Folgendes umfasst:
ein Gehäuse (310, 1040);
ein erstes Antennenmodul (242, 730, 981, 1081, 1140), das in einem ersten Bereich eines Innenraums (701) des Gehäuses (310, 1040) angeordnet ist, wobei das erste Antennenmodul (242, 730, 981, 1081, 1140) ein erstes Substrat (590, 620), das im Innenraum (701) angeordnet ist, eine erste Array-Antenne (630), die auf dem ersten Substrat angeordnet ist und ein erstes Kommunikationsschema unterstützt, sowie eine Vielzahl von ersten Antennen (551, 553, 641, 643) umfasst, die auf einer Fläche des ersten Substrats (590, 620) angeordnet sind, die einer ersten Richtung zugewandt ist, und ein zweites, davon verschiedenes Kommunikationsschema unterstützen;
ein zweites Antennenmodul (244, 750, 982, 1082, 1142), das in einem zweiten Bereich angeordnet ist, der sich vom ersten Bereich des Innenraums (701) unterscheidet, wobei das zweite Antennenmodul (244, 750, 982, 1082, 1142) ein zweites Substrat (670), das sich vom ersten Substrat unterscheidet und im Innenraum (701) angeordnet ist, eine zweite Array-Antenne (650, 751), die auf dem zweiten Substrat (670) angeordnet ist und das erste Kommunikationsschema unterstützt, sowie eine Vielzahl von zweiten Antennen (757, 1163) umfasst, die auf einer Fläche des zweiten Substrats (670) angeordnet sind, die einer zweiten Richtung zugewandt ist, die sich von der ersten Richtung unterscheidet, und die das zweite Kommunikationsschema unterstützen;
eine erste drahtlose Kommunikationsschaltung (1120), die im Innenraum (701) angeordnet und so konfiguriert ist, dass sie ein drahtloses Signal des ersten Kommunikationsschemas über die erste Array-Antenne (630) und/oder die zweite Array-Antenne (650, 751) überträgt und/oder empfängt;
eine zweite drahtlose Kommunikationsschaltung (1130), die im Innenraum (701) angeordnet und so konfiguriert ist, dass sie ein drahtloses Signal des zweiten Kommunikationsschemas über die ersten Antennen (551, 553, 641, 643) und/oder die zweiten Antennen (757, 1163) überträgt und/oder empfängt; und
einen Prozessor (120, 1110), der elektrisch mit der ersten drahtlosen Kommunikationsschaltung (1120) und der zweiten drahtlosen Kommunikationsschaltung (1130) verbunden ist,
wobei der Prozessor (120, 1110) so konfiguriert ist, dass er eine Position einer externen Vorrichtung (102, 104) schätzt, basierend auf
einem ersten Signal, das über die Vielzahl von ersten Antennen (551, 553, 641, 643) oder die Vielzahl von zweiten Antennen (757, 1163) empfangen wird, und
einem zweiten Signal, das über eine der Vielzahl von ersten Antennen (551, 553, 641, 643) und eine der Vielzahl von zweiten Antennen (757, 1163) empfangen wird.

2. Elektronische Vorrichtung (102, 900, 1000, 1100) nach Anspruch 1, wobei das erste Substrat (590, 620) eine erste Fläche (310a, 491, 591, 611, 891, 911) und eine zweite Fläche (310b, 492, 592, 612) umfasst, die einer Richtung zugewandt ist, die der der ersten Fläche (310a, 491, 591, 611, 891, 911) entgegengesetzt ist, und
wobei die erste Array-Antenne (630) und die ersten Antennen (551, 553, 641, 643) in verschiedenen Bereichen auf der ersten Fläche (310a, 491, 591, 611, 891, 911) angeordnet sind.

3. Elektronische Vorrichtung (102, 900, 1000, 1100) nach Anspruch 1, wobei das zweite Substrat (670) eine dritte Fläche (921) und eine vierte Fläche (922) umfasst, die einer Richtung zugewandt ist, die der der dritten Fläche (921) entgegengesetzt ist, und
wobei die zweite Array-Antenne (650, 751) und die Vielzahl von zweiten Antennen (757, 1163) in verschiedenen Bereichen auf der dritten Fläche (921) angeordnet sind.

4. Elektronische Vorrichtung (102, 900, 1000, 1100) nach Anspruch 1, wobei das erste Substrat (590, 620) eine erste Fläche (310a, 491, 591, 611, 891, 911) und eine zweite Fläche (310b, 492, 592, 612) umfasst, die einer Richtung zugewandt ist, die der der ersten Fläche (310a, 491, 591, 611, 891, 911) entgegengesetzt ist,
wobei die erste Array-Antenne (630) auf der ersten Fläche (310a, 491, 591, 611, 891, 911) angeordnet ist, und
wobei die ersten Antennen (551, 553, 641, 643) innerhalb des ersten Substrats angeordnet sind.

5. Elektronische Vorrichtung (102, 900, 1000, 1100) nach Anspruch 1, wobei das zweite Substrat (670) eine dritte Fläche (921) und eine vierte Fläche (922) umfasst, die einer Richtung zugewandt ist, die der der dritten Fläche (921) entgegengesetzt ist,
wobei die zweite Array-Antenne (650, 751) auf der dritten Fläche (921) angeordnet ist, und
wobei eine Vielzahl von zweiten Antennen (757, 1163) innerhalb des zweiten Substrats angeordnet ist.

6. Elektronische Vorrichtung (102, 900, 1000, 1100) nach Anspruch 1, wobei das Gehäuse (310, 1040) eine erste Platte, die einer ersten Richtung zugewandt ist, eine zweite Platte, die einer zweiten Richtung entgegengesetzt zur Richtung der ersten Platte zugewandt ist, und ein seitliches Element (710) umfasst, das den Innenraum (701) zwischen der ersten Platte und der zweiten Platte umgibt,
wobei das seitliche Element (710) eine erste Seitenfläche (710a, 913c, 1041) mit einer ersten Länge, eine zweite Seitenfläche (710b, 913b, 1042), die einer Richtung zugewandt ist, die der der ersten Fläche (710a, 913c, 1041) entgegengesetzt ist, und eine dritte Seitenfläche (710c, 1043), die senkrecht zur ersten Seitenfläche (710a, 913c, 1041) ist und eine zweite Länge aufweist, die relativ länger ist als die erste Länge, sowie eine vierte Seitenfläche (710d, 1044) umfasst, die einer Richtung zugewandt ist, die der der dritten Seitenfläche (710c, 1043) entgegengesetzt ist,
wobei das erste Antennenmodul (242, 730, 981, 1081, 1140) in einer Position nahe der ersten Seitenfläche (710a, 913c, 1041) im Innenraum (701) angeordnet ist, sodass eine Längsrichtung der ersten Seitenfläche (710a, 913c, 1041) parallel zu einer Anordnungsrichtung der ersten Array-Antenne (630) verläuft, und
wobei das zweite Antennenmodul (244, 750, 982, 1082, 1142) an einer Position nahe der dritten Seitenfläche (710c, 1043) im Innenraum (701) angeordnet ist, sodass eine Längsrichtung der dritten Seitenfläche (710c, 1043) parallel zu einer Anordnungsrichtung der zweiten Array-Antenne (650, 751) verläuft.

7. Elektronische Vorrichtung (102, 900, 1000, 1100) nach Anspruch 1, wobei der Prozessor (120, 1110) so konfiguriert ist, dass er die Position der externen Vorrichtung (102, 104) basierend auf einer ersten Phasendifferenz von Signalen, die über die Vielzahl von ersten Antennen (551, 553, 641, 643) oder über die Vielzahl von zweiten Antennen (757, 1163) zu einem ersten Zeitpunkt empfangen, und einer zweiten Phasendifferenz von Signalen, die über eine der Vielzahl von zweiten Antennen (757, 1163) und eine der Vielzahl von ersten Antennen (551, 553, 641, 643) zu einem zweiten Zeitpunkt empfangen werden, der sich vom ersten Zeitpunkt unterscheidet, abschätzt.

8. Elektronische Vorrichtung (102, 900, 1000, 1100) nach Anspruch 7, ferner umfassend:
ein drittes Antennenmodul (248, 983, 1083, 1143), das in einem zweiten Bereich angeordnet ist, der sich vom ersten Bereich des Innenraums (701) unterscheidet, wobei das dritte Antennenmodul (248, 983, 1083, 1143) ein drittes Substrat umfasst, das sich vom ersten Substrat (590, 620) und vom zweiten Substrat (670) unterscheidet und im Innenraum (701) angeordnet ist, eine dritte Array-Antenne, die auf dem dritten Substrat angeordnet ist und das erste Kommunikationsschema unterstützt, und mindestens eine dritte Antenne, die auf dem dritten Substrat angeordnet ist und der dritten Richtung zugewandt ist, die sich von der ersten Richtung und der zweiten Richtung unterscheidet, und das zweite Kommunikationsschema unterstützt,
wobei der Prozessor konfiguriert ist zum:
Auswählen des ersten Antennenmoduls (242, 730, 981, 1081, 1140) und des zweiten Antennenmoduls (244, 750, 982, 1082, 1142) aus dem ersten Antennenmodul (242, 730, 981, 1081, 1140), dem zweiten Antennenmodul (244, 750, 982, 1082, 1142) und dem dritten Antennenmodul (248, 983, 1083, 1143) basierend auf Informationen bezüglich des dritten Antennenmoduls zum Übertragen und/oder Empfangen von Daten unter Verwendung des ersten Kommunikationsschemas, und
Schätzen der Position der externen Vorrichtung (102, 104) basierend auf der ersten Phasendifferenz der Signale, die über die Vielzahl von ersten Antennen (551, 553, 641, 643) oder über die Vielzahl von zweiten Antennen empfangen werden (757, 1163) zum ersten Zeitpunkt und der zweiten Phasendifferenz von Signalen, die über eine der Vielzahl von zweiten Antennen (757, 1163) und eine der Vielzahl von ersten Antennen (551, 553, 641, 643) zum zweiten Zeitpunkt empfangen werden.

9. Elektronische Vorrichtung (102, 900, 1000, 1100) nach Anspruch 7, wobei die Vielzahl von ersten Antennen (551, 553, 641, 643), die konfiguriert ist, um die Signale zu empfangen, auf einer ersten imaginären Achse angeordnet ist, und
wobei eine der Vielzahl von zweiten Antennen (757, 1163) und eine der Vielzahl von ersten Antennen (551, 553, 641, 643), die für den Empfang der Signale konfiguriert sind, auf einer zweiten imaginären Achse angeordnet sind, die sich von der ersten Achse unterscheidet.

10. Elektronische Vorrichtung (102, 900, 1000, 1100) nach Anspruch 1, wobei das erste Kommunikationsschema eine New-Radio-, NR-,Kommunikation umfasst, und
wobei das zweite Kommunikationsschema eine Ultrabreitband(UWB)-Kommunikation umfasst.

11. Elektronische Vorrichtung (102, 900, 1000, 1100) nach Anspruch 1, wobei das Gehäuse (310, 1040) zumindest teilweise einen leitfähigen Abschnitt (760, 916) umfasst.

12. Elektronische Vorrichtung (102, 900, 1000, 1100) nach Anspruch 11, wobei die Vielzahl von ersten Antennen (551, 553, 641, 643) auf einer ersten imaginären Achse angeordnet ist, und
wobei eine Antenne der Vielzahl von ersten Antennen (551, 553, 641, 643) und der leitfähige Abschnitt (760, 916) auf einer zweiten imaginären Achse angeordnet sind, die sich von der ersten Achse unterscheidet.

13. Elektronische Vorrichtung (102, 900, 1000, 1100) nach Anspruch 12, wobei der Prozessor (120, 1110) so konfiguriert ist, dass er eine Position einer externen Vorrichtung (102, 104) basierend auf einer dritten Phasendifferenz von Signalen, die über die Vielzahl von ersten Antennen (551, 553, 641, 643) zu einem dritten Zeitpunkt und einer vierten Phasendifferenz von Signalen, die über eine Antenne der Vielzahl von ersten Antennen (551, 553, 641, 643) und den leitfähigen Abschnitt (760, 916) zu einem vierten Zeitpunkt, der sich vom dritten Zeitpunkt unterscheidet, empfangen werden, abschätzt.

14. Elektronische Vorrichtung (102, 900, 1000, 1100) nach Anspruch 1, wobei die ersten Antennen (551, 553, 641, 643) und/oder die zweiten Antennen (757, 1163) eine Dipolantenne (248, 327), eine gefaltete Dipolantenne (248, 327), eine Rahmenantenne (248, 327) oder eine gefaltete Rahmenantenne (248, 327) umfassen.

## Revendications

1. Dispositif électronique (102, 900, 1000, 1100) comprenant :
un boîtier (310, 1040) ;
un premier module d'antenne (242, 730, 981, 1081, 1140) disposé dans une première zone d'un espace intérieur (701) du boîtier (310, 1040), le premier module d'antenne (242, 730, 981, 1081, 1140) comprenant un premier substrat (590, 620) disposé dans l'espace intérieur (701), une première antenne réseau (630) disposée sur le premier substrat et prenant en charge un premier schéma de communication, et une pluralité de premières antennes (551, 553, 641, 643) disposées sur une surface du premier substrat (590, 620) faisant face à une première direction et prenant en charge un deuxième schéma de communication différent ;
un second module d'antenne (244, 750, 982, 1082, 1142) disposé dans une seconde zone différente de la première zone de l'espace intérieur (701), le second module d'antenne (244, 750, 982, 1082, 1142) comprenant un second substrat (670) différent du premier substrat et disposé dans l'espace intérieur (701), une deuxième antenne réseau (650, 751) disposée sur le deuxième substrat (670) et prenant en charge le premier schéma de communication, et une pluralité de deuxièmes antennes (757, 1163) disposées sur une surface du deuxième substrat (670) faisant face à une deuxième direction différente de la première direction et prenant en charge le deuxième schéma de communication ;
un premier circuit de communication sans fil (1120) disposé dans l'espace intérieur (701) et configuré pour transmettre et/ou recevoir un signal sans fil du premier schéma de communication par l'intermédiaire de la première antenne réseau (630) et/ou de la deuxième antenne réseau (650, 751) ;
un deuxième circuit de communication sans fil (1130) disposé dans l'espace intérieur (701) et configuré pour transmettre et/ou recevoir un signal sans fil du deuxième schéma de communication par l'intermédiaire des premières antennes (551, 553, 641, 643) et/ou des secondes antennes (757, 1163) ; et
un processeur (120, 1110) relié électriquement au premier circuit de communication sans fil (1120) et au deuxième circuit de communication sans fil (1130),
dans lequel le processeur (120, 1110) est configuré pour estimer une position d'un dispositif externe (102, 104) en se basant sur
un premier signal reçu par l'intermédiaire de la pluralité de premières antennes (551, 553, 641, 643) ou de la pluralité de deuxièmes antennes (757, 1163), et
un second signal reçu par l'une de la pluralité de premières antennes (551, 553, 641, 643) et l'une de la pluralité de deuxièmes antennes (757, 1163).

2. Dispositif électronique (102, 900, 1000, 1100) de la revendication 1, dans lequel le premier substrat (590, 620) comprend une première surface (310a, 491, 591, 611, 891, 911) et une deuxième surface (310b, 492, 592, 612) faisant face à une direction opposée à celle de la première surface (310a, 491, 591, 611, 891, 911), et
dans lequel la première antenne réseau (630) et les premières antennes (551, 553, 641, 643) sont disposées dans des zones différentes sur la première surface (310a, 491, 591, 611, 891, 911).

3. Dispositif électronique (102, 900, 1000, 1100) de la revendication 1, dans lequel le deuxième substrat (670) comprend une troisième surface (921) et une quatrième surface (922) faisant face à une direction opposée à celle de la troisième surface (921), et
dans lequel la deuxième antenne réseau (650, 751) et la pluralité de deuxièmes antennes (757, 1163) sont disposées dans des zones différentes sur la troisième surface (921).

4. Dispositif électronique (102, 900, 1000, 1100) de la revendication 1, dans lequel le premier substrat (590, 620) comprend une première surface (310a, 491, 591, 611, 891, 911) et une seconde surface (310b, 492, 592, 612) faisant face à une direction opposée à celle de la première surface (310a, 491, 591, 611, 891, 911),
dans lequel la première antenne réseau (630) est disposée sur la première surface (310a, 491, 591, 611, 891, 911), et
dans lequel les premières antennes (551, 553, 641, 643) sont disposées à l'intérieur du premier substrat.

5. Dispositif électronique (102, 900, 1000, 1100) de la revendication 1, dans lequel le deuxième substrat (670) comprend une troisième surface (921) et une quatrième surface (922) faisant face à une direction opposée à celle de la troisième surface (921),
dans lequel la deuxième antenne réseau (650, 751) est disposée sur la troisième surface (921), et
dans lequel la pluralité de secondes antennes (757, 1163) est disposée à l'intérieur du second substrat.

6. Dispositif électronique (102, 900, 1000, 1100) de la revendication 1, dans lequel le boîtier (310, 1040) comprend une première plaque faisant face à une première direction, une deuxième plaque faisant face à une deuxième direction opposée à celle de la première plaque, et un élément latéral (710) entourant l'espace intérieur (701) entre la première plaque et la deuxième plaque,
dans lequel l'élément latéral (710) comprend une première surface latérale (710a, 913c, 1041) ayant une première longueur, une deuxième surface latérale (710b, 913b, 1042) faisant face à une direction opposée à celle de la première surface latérale (710a, 913c, 1041), une troisième surface latérale (710c, 1043) perpendiculaire à la première surface latérale (710a, 913c, 1041) et ayant une deuxième longueur relativement plus longue que la première longueur, et une quatrième surface latérale (710d, 1044) faisant face à une direction opposée à celle de la troisième surface latérale (710c, 1043),
dans lequel le premier module d'antenne (242, 730, 981, 1081, 1140) est disposé à proximité de la première surface latérale (710a, 913c, 1041) dans l'espace intérieur (701) de telle sorte que la direction longitudinale de la première surface latérale (710a, 913c, 1041) soit parallèle à la direction d'agencement de la première antenne réseau (630), et
dans lequel le second module d'antenne (244, 750, 982, 1082, 1142) est disposé à proximité de la troisième surface latérale (710c, 1043) dans l'espace intérieur (701) de telle sorte qu'une direction longitudinale de la troisième surface latérale (710c, 1043) soit parallèle à la direction d'agencement de la deuxième antenne réseau (650, 751).

7. Dispositif électronique (102, 900, 1000, 1100) de la revendication 1, dans lequel le processeur (120, 1110) est configuré pour estimer la position du dispositif externe (102, 104), en se basant sur une première différence de phase des signaux reçus par l'intermédiaire de la pluralité de premières antennes (551, 553, 641, 643) ou par la pluralité de deuxièmes antennes (757, 1163) à un premier instant, et une deuxième différence de phase des signaux reçus par l'une de la pluralité de deuxièmes antennes (757, 1163) et l'une de la pluralité de premières antennes (551, 553, 641, 643) à un second instant différent du premier instant.

8. Dispositif électronique (102, 900, 1000, 1100) de la revendication 7, comprenant en outre :
un troisième module d'antenne (248, 983, 1083, 1143) disposé dans une deuxième zone différente de la première zone de l'espace intérieur (701), le troisième module d'antenne (248, 983, 1083, 1143) comprenant un troisième substrat différent du premier substrat (590, 620) et du second substrat (670) et disposé dans l'espace intérieur (701), une troisième antenne réseau disposée sur le troisième substrat et prenant en charge le premier schéma de communication, et au moins une troisième antenne disposée sur le troisième substrat, faisant face à une troisième direction différente de la première direction et de la deuxième direction, et prenant en charge le deuxième schéma de communication,
dans lequel le processeur est configuré pour :
sélectionner le premier module d'antenne (242, 730, 981, 1081, 1140) et le second module d'antenne (244, 750, 982, 1082, 1142) parmi le premier module d'antenne (242, 730, 981, 1081, 1140), le second module d'antenne (244, 750, 982, 1082, 1142) et le troisième module d'antenne (248, 983, 1083, 1143) en se basant sur des informations relatives au troisième module d'antenne pour transmettre et/ou recevoir des données en utilisant le premier schéma de communication, et
estimer la position du dispositif externe (102, 104) en se basant sur la première différence de phase des signaux reçus par l'intermédiaire de la pluralité de premières antennes (551, 553, 641, 643) ou par l'intermédiaire de la pluralité de deuxièmes antennes (757, 1163) à un premier instant, et la deuxième différence de phase des signaux reçus par l'une de la pluralité de deuxièmes antennes (757, 1163) et l'une de la pluralité de premières antennes (551, 553, 641, 643) à un second instant.

9. Dispositif électronique (102, 900, 1000, 1100) de la revendication 7, dans lequel la pluralité de premières antennes (551, 553, 641, 643) configurée pour recevoir les signaux est disposée sur un premier axe imaginaire, et
dans lequel l'une des pluralités de deuxièmes antennes (757, 1163) et l'une des pluralités de premières antennes (551, 553, 641, 643), configurées pour recevoir les signaux, sont disposées sur un deuxième axe imaginaire différent du premier axe.

10. Dispositif électronique (102, 900, 1000, 1100) de la revendication 1, dans lequel le premier schéma de communication comprend la communication nouvelle radio, NR, et
dans lequel le second schéma de communication comprend une communication à bande ultra-large (UWB).

11. Dispositif électronique (102, 900, 1000, 1100) de la revendication 1, dans lequel le boîtier (310, 1040) comprend au moins partiellement une partie conductrice (760, 916).

12. Dispositif électronique (102, 900, 1000, 1100) de la revendication 11, dans lequel la pluralité de premières antennes (551, 553, 641, 643) est disposée sur un premier axe imaginaire, et
dans lequel une antenne parmi la pluralité de premières antennes (551, 553, 641, 643) et la partie conductrice (760, 916) sont disposées sur un deuxième axe imaginaire différent du premier axe.

13. Dispositif électronique (102, 900, 1000, 1100) de la revendication 12, dans lequel le processeur (120, 1110) est configuré pour estimer une position d'un dispositif externe (102, 104), en se basant sur une troisième différence de phase des signaux reçus par l'intermédiaire de la pluralité de premières antennes (551, 553, 641, 643) à un troisième instant et une quatrième différence de phase des signaux reçus par l'une des antennes de la pluralité de premières antennes (551, 553, 641, 643) et la partie conductrice (760, 916) à un quatrième instant différent du troisième instant.

14. Dispositif électronique (102, 900, 1000, 1100) de la revendication 1, dans lequel les premières antennes (551, 553, 641, 643) et/ou les deuxièmes antennes (757, 1163) comprennent une antenne dipôle (248, 327), une antenne dipôle pliée (248, 327), une antenne cadre (248, 327) ou une antenne cadre pliée (248, 327).
